# EUROPÄISCHE PATENTANMELDUNG

(11) **EP 1 426 137 A2**
(43) Veröffentlichungstag der Anmeldung: **09.06.2004**
(21) Anmeldenummer: 03028000.2
(22) Anmeldetag: 05.12.2003
(51) Int. Cl.: B23Q 3/157

(54) **Werkzeugmaschine**

(30) Priorität: 05.12.2002 DE 10257151; 19.05.2003 DE 20307905 U
(71) Anmelder: GROB-Werke Burkhart Grob e.K., 87719 Mindelheim (DE)
(72) Erfinder: Grob, Burkhart, 86825 Bad Wörishofen (DE); Lutz, Heinrich, 87742 Dirlewang (DE); Stave, Hinrich, 87719 Mindelheim (DE)
(74) Vertreter: Pfister, Stefan Helmut Ulrich

(57) **Zusammenfassung**

Die Erfindung betrifft eine Werkzeugmaschine (1), insbesondere für die spanabhebende Bearbeitung von Werkstücken, für welche mehrere Bearbeitungsspindeln (2) vorgesehen sind, und wobei ein Werkzeugmagazin (45) zum Vorhalten und Wechseln des Werkzeuges (31) dient und das eine Werkzeugmagazin (45) zum Wechseln der Werkzeuge mindestens zweier Bearbeitungsspindeln (2) dient. Zumindest ein Teil der vorgehaltenen Werkzeuge (31) und die zu wechselnden Werkzeuge (31) sind in einer Ebene (410) angeordnet.

## Beschreibung

Die Erfindung betrifft eine Werkzeugmaschine für die insbesondere spanabhebende Bearbeitung von Werkstücken durch eine mindestens eine Bearbeitungsspindel aufweisende Bearbeitungseinheit, wobei ein Werkzeugmagazin vorgesehen ist, welches zum Vorhalten und Wechseln der Werkzeuge auf der Bearbeitungsspindel dient.

Der Einsatz eines Werkzeugmagazins bei variabel einsetzbaren Werkzeugmaschinen ist hinlänglich bekannt. Für einen raschen Werkzeugwechsel, der letztendlich auch die Taktzeit der Werkzeugmaschine bestimmt, ist es grundsätzlich günstig, möglichst viele Werkzeuge im Bereich der Bearbeitungsspindel beziehungsweise der Bearbeitungseinheit aufzubewahren. Gleichzeitig wird von einem Werkzeugmagazin gefordert, daß der Wechselprozeß als solcher sehr schnell durchgeführt werden soll.

Dies führt grundsätzlich dazu, daß verhältnismäßig große Werkzeugmagazine im Bereich der Bearbeitungsspindel zu positionieren sind, das Gewicht des Werkzeugmagazins ist dabei erheblich.

Des weiteren muß an den bekannten Werkzeugmagazinen auch eine Vorrichtung vorgesehen sein, die es erlaubt, das Werkzeugmagazin für den Werkzeugwechselprozeß in den Bereich der Bearbeitungsspindel zu bringen, soweit hierfür nicht die jeweilige Bewegungsachse der Werkzeugspindel herangezogen werden kann. Der konstruktive Aufwand und der Platzbedarf für die Werkzeugmagazine ist in diesem Anwendungsfall entsprechend hoch, wobei dies notgedrungen mit entsprechenden Einschränkungen des Bearbeitungsraums einhergeht, der unter Umständen unmittelbar an das Werkzeugmagazin angrenzt.

Die bekannten Werkzeugmagazine werden dabei an eigenen Halterungen in der Nähe der Bearbeitungsspindel montiert, wobei den entsprechenden Gewichten des Werkzeugmagazins Rechnung getragen werden muß. Das bedeutet, daß unter Umständen in dem sowieso nur begrenzten Bearbeitungsraum die Zugänglichkeit durch Streben behindert wird, die die Zugänglichkeit zum Bearbeitungsraum behindern oder aber den Bearbeitungsraum entsprechend beschränken. Dabei ist zu beachten, daß insbesondere bei Mehrspindelanordnungen der Bearbeitungsraum noch genauer und exakter zu planen ist, da auf dem engen Raum mehrere Bearbeitungen parallel durchzuführen sind. Die bekannten kragenden Bauweisen für die Befestigung des Werkzeugmagazins gehen nicht grundsätzlich konform mit der Anforderung einer hochgenauen Bearbeitung der Bearbeitungsspindeln.

Des Weiteren sind im Stand der Technik Werkzeugmaschinen bekannt, die mehrere Bearbeitungsspindeln aufweisen. Nachteilig hierbei ist, daß jeweils ein Magazin pro Spindel vorgesehen ist. Dies führt zu einer entsprechend hohen Anzahl von Werkzeugmagazinen im Arbeitsraum. Die Bewegbarkeit der Spindeln ist daher eingeschränkt und nur durch entsprechenden, zusätzlichen Aufwand ist es möglich, auch komplexere Bearbeitungen an solchen Werkzeugmaschinen durchzuführen.

Eine Werkzeugmaschine wie zuvor beschrieben, ist aus der Offenlegungsschrift DE 197 08 096 A1 bekannt. Dort wird ein Bearbeitungszentrum vorgestellt, wobei mindestens eine Arbeitsspindel mit vorzugsweise waagerechter Spindellage vorzugsweise in X-, Y- und Z-Richtung verfahrbar ist und jeder Arbeitsspindel mindestens ein im Wesentlichen zylinderförmiger, um eine zentrale Achse drehbarer Werkzeugspeicher mit Speicherplätzen zur Ablage des oder der Werkzeuge durch die Arbeitsspindel(n) zugeordnet ist. Der dort vorgestellte Werkzeugspeicher besteht aus einer Werkzeugscheibe oder aus mehreren parallel zueinander angeordneten zu einem Trommelspeicher zusammengefaßten Werkzeugscheiben, wobei die Werkzeugscheiben einzeln oder gemeinsam um eine zentrale, senkrecht zur Spindelachse angeordnete Achse drehbar sind. Die Werkzeugachsen sind radial auf der Scheibe orientiert.

Zum Werkstückwechsel ist es erforderlich, die Spindel in X-beziehungsweise Y-Richtung bis in die Position vor dem jeweiligen Werkzeughalter zu fahren und dann in Z-Richtung zwischen den Werkzeugscheiben bis über den Werkzeughalter einzufahren und schließlich um einen kurzen Hub in den gabelförmigen Werkzeughalter abzusenken. Damit wird der Aufwand für die Bearbeitungsmaschine selbst sehr umfangreich, da die Spindelachsen in X-, Y- und Z-Richtung verschiebbar ausgebildet sein müssen.

Auch ist es notwendig, die Abläufe bezüglich der zu wechselnden Werkzeuge bei mehreren Spindeln so zu koordinieren, daß tatsächlich, wie in der Druckschrift beschrieben, auch gleichzeitig die Werkzeuge von verschiedenen Werkzeughaltern auf verschiedene Spindeln übergeben werden können. Dabei werden die Werkzeuge mehrerer Spindeln nur dadurch gewechselt, daß die jeweiligen Werkzeuge je aus unterschiedlichen, übereinander angeordneten Scheiben entnommen werden, wodurch resultiert, daß im Arbeitsraum, der sowieso sehr eng bemessen ist, ein sehr großes zylinderartiges Werkzeugmagazin vorgehalten werden muß.

Des weiteren kann es erforderlich sein, daß die Spindel dann in eine weitere Ebene verfahren werden muß, um ein dort abgelegtes Werkzeug aus einem Werkzeughalter zu entnehmen. Auch dadurch werden die Arbeitsabläufe verzögert, was insgesamt zu längeren Bearbeitungszeiten allein durch den Wechsel der Bearbeitungswerkzeuge führt.

Die vorliegende Erfindung hat es sich zur Aufgabe gemacht, bekannte Werkzeugmaschinen dahingehend zu verbessern, daß das Werkzeugmagazin möglichst platzsparend ausgebildet ist.

Zur Lösung dieser erfindungsgemäßen Aufgabe schlägt die Erfindung vor, daß zumindest ein Teil der vorgehaltenen Werkzeuge und die zu wechselnden Werkzeuge in einer Ebene angeordnet ist.

Gemäß der Lösung nach dem Stand der Technik befinden sich zwar die zu wechselnden Werkzeuge in einer Ebene, dabei sind die zu wechselnden Werkzeuge übereinander auf verschiedenen Scheiben angeordnet. Jedoch sind alle weiteren, vorgehaltenen Werkzeuge nicht mehr auf dieser Ebene, sondern befinden sich auf den verschiedenen Scheiben in anderen Positionen, wodurch der verhältnismäßig große Platzaufwand resultiert. Der Begriff der Ebene wird hierbei als plane Fläche, eben als Ebene verstanden. Der wesentliche Vorteil der Erfindung liegt insbesondere darin, daß dadurch eine sehr platzsparende Anordnung realisierbar ist.

Zu beachten ist dabei, daß insbesondere mehrere zu wechselnde Werkzeuge sowie ein Teil der vorgehaltenen Werkzeuge in einer Ebene angeordnet sind. Hierunter wird insbesondere verstanden, daß die zu wechselnden Werkzeuge mindestens zweier Bearbeitungsspindeln in eine Ebene mit weiteren, vorgehaltenen Werkzeugen sind.

Durch diesen Vorschlag wird der Nachteil im Stand der Technik vermieden. Es wird ein Werkzeugmagazin vorgehalten, welches in der Lage ist, die Werkzeuge an mindestens zwei Bearbeitungsspindeln zu wechseln. Dabei ist es in einer ersten Variante möglich, daß die Werkzeuge an den Spindeln nacheinander gewechselt werden. Die Werkzeugmaschine sieht dabei vor, daß das Werkzeugmagazin an der jeweiligen Bearbeitungsspindel positionierbar ist. In einer anderen Variante der Erfindung ist vorgesehen, daß das Werkzeugmagazin gleichzeitig an mehreren, mindestens zwei Bearbeitungsspindeln das Werkzeug wechselt. Durch diese Ausgestaltung der Erfindung wird ein erheblicher, zusätzlicher Zeitvorteil erreicht. Die Totzeiten, die sich durch den Werkzeugwechsel sowieso ergeben, werden durch diese erfindungsgemäße Variante geschickterweise für das Wechseln mehrerer Werkzeuge eingesetzt, wodurch sich letztendlich die Leistung einer solchen erfindungsgemäßen Werkzeugmaschine, unter Reduzierung des Aufwandes des Werkzeugmagazins im Bearbeitungsraum, ergibt. Die erfindungsgemäße Maschine wird schneller beziehungsweise leistet mehr und erlaubt aber auch gleichzeitig die Durchführung von komplexeren Arbeiten, da der Arbeitsraum nur durch das Vorhandensein eines Werkzeugmagazins eingeengt wird. Dabei ist zu beachten, daß das Werkzeugmagazin sowieso nur während der Werkzeugwechselphase im Bearbeitungsraum ist und ansonsten außerhalb angeordnet ist. Die Reduzierung der Werkzeugmagazine auf eine deutliche geringere Anzahl wie die Anzahl der Bearbeitungsspindeln, ergibt aber auch eine Einsparung der notwendigen Führungen, die gegebenenfalls in den Bearbeitungsraum hereinragen.

In einer weiteren bevorzugten Ausgestaltung der Erfindung ist vorgesehen, daß eine Verbindungslinie zwischen den Bearbeitungsspindeln Teil der Ebene ist. Es wird dabei davon ausgegangen, daß gleiche bzw. vergleichbare Positionen der Spindeln jeweils Teil dieser Verbindungslinie sind. Zum Beispiel bezieht sich die Verbindungslinie auf die Auflagefläche der Spindelköpfe, auf welchen die Werkzeuge aufliegen. Alternativ ist es natürlich möglich, daß diese Verbindungslinie nicht Teil der Ebene ist, sondern zu dieser parallel angeordnet ist. Auch diese Alternative gehört zur Erfindung.

Des Weiteren ist gemäß der Erfindung vorgesehen, daß die Ebene für die Anordnung der Werkzeuge im Werkzeugmagazin im wesentlichen vertikal oder alternativ hierzu horizontal orientiert ist. Insbesondere eine vertikale Orientierung bietet den Vorteil, daß ein Großteil der Werkzeuge über dem Bearbeitungsraum angeordnet wird. Bei einer horizontalen Ausrichtung werden dabei die Werkzeuge seitlich neben dem Bearbeitungsraum angeordnet. Es ist dabei natürlich auch möglich, diese Ebene winkelig im Raum zu orientieren, dies hängt aber letztendlich von der jeweiligen Bearbeitungsaufgabe der Werkzeugmaschine ab, wodurch die jeweilige Anordnung optimiert wird.

Dabei ist vorgesehen, daß in einer weiteren erfindungsgemäßen Variante die Spindelachse parallel oder winkelig, insbesondere rechtwinklig zur Ebene orientiert ist. Die Werkzeuge werden in dem Werkzeugmagazin so vorgehalten, daß die Rotationsachse der Werkzeuge winkelig, insbesondere rechtwinklig zur Ebene orientiert sind und so in einfacher Weise in die Werkzeugspindel eingewechselt werden können. Dabei befinden sich die Werkzeuge bei dieser Ausgestaltung im wesentlichen stehend mit parallelen Spindelachsen nebeneinander im Werkzeugmagazin, wodurch eine große Anzahl von Werkzeugen stehend nebeneinander auf einer verhältnismäßig kleinen Fläche untergebracht werden.

Dabei ist es erfindungsgemäß prinzipiell auch möglich, die Werkzeuge nicht nur einreihig, sondern auch mehrreihig im Werkzeugmagazin anzuordnen und so die Dichte an verfügbaren Werkzeugen weiter zu erhöhen. Bei der mehrreihigen Anordnung der Werkzeuge in dem Werkzeugmagazin ist es von Vorteil, daß das Werkzeugmagazin einen entsprechenden Positionierantrieb aufweist, durch welche die jeweilige gewünschte Werkzeugreihe den Bearbeitungsspindeln angeboten wird. Gleiches kann natürlich durch den entsprechenden Positionierantrieb der Spindeln geleistet werden.

Gemäß der Erfindung ist es alternativ aber auch möglich, daß die Werkzeugachse des in dem Werkzeugmagazin vorgehaltenen Werkzeuges parallel zur Ebene orientiert ist.

Neben dieser winkeligen, insbesondere rechtwinkeligen Anordnung bezüglich der Ebene, die gegebenenfalls zu einer "stehenden Anordnung" der Werkzeuge im Werkzeugmagazin führt, ist es möglich, die Werkzeuge auf der Ebene radial zu positionieren um zum Beispiel mehrere Bearbeitungsspindeln, deren Spindelachsen in einem gewissen Winkel zueinander angeordnet sind, mit Werkzeugen zu versorgen.

Die Erfindung ist dabei dazu geeignet, sowohl bei Werkzeugmaschinen Verwendung zu finden, die mehrere Bearbeitungsspindeln aufweist, deren Achsen entweder parallel zueinander orientiert sind oder aber winkelig, bevorzugt rechtwinkelig usw. orientiert sind.

Zur Lösung der eingangs gestellten Aufgabe geht die Erfindung auch aus von einer Werkzeugmaschine wie eingangs beschrieben und schlägt vor, daß das Werkzeugmagazin von einem Tragbalken gehalten ist, welcher das Werkzeugmagazin durchdringt.

Die bekannten Konstruktionen hängen das Werkzeugmagazin zum Beispiel an einen frei kragenden Träger auf. Dies führt dazu, daß wertvoller Bearbeitungsraum für die Befestigung und den Anschluß des Werkzeugmagazins und für die Bewegung des Werkzeugmagazins geopfert wird. Dieser Nachteil im Stande der Technik wird durch die Erfindung in sehr eleganter Weise gelöst, indem nämlich das Werkzeugmagazin von dem Tragbalken durchdrungen wird und so im Mittel zumindest ein Teil (zum Beispiel zwischen 25 % und 75 %) der benötigten Werkzeuge oberhalb der sowieso notwendigen Tragkonstruktion und somit nicht in unmittelbarer Nähe zum Arbeitsraum platziert ist. Dabei ist natürlich das Werkzeugmagazin so konzipiert, daß diese nicht benötigten Werkzeuge in rascher Weise in eine Wechselposition gebracht werden können. Ein solcher Antrieb ist aber auch im Stand der Technik notwendig.

Gleichzeitig ist es aber durch die Ausbildung der Erfindung möglich, den Tragbalken so zu lagern, daß er zur Erhöhung der Stabilität der gesamten Werkzeugmaschine mit dient. Der Tragbalken ist so positionierbar, daß er nicht frei kragend die Masse des Werkzeugsmagazines aufnimmt. Dabei ist es prinzipiell möglich, die Lagerung des Tragbalkens so zu wählen, daß dieser im Bereich des Bearbeitungsraumes nicht stört.

Durch die vorgeschlagenen Maßnahmen erreicht die Erfindung eine effizientere Ausnutzung bei gleichzeitig besserer Zugänglichkeit des Arbeitsraumes.

In einer bevorzugten Ausgestaltung der Erfindung ist vorgesehen, daß das Werkzeugsmagazin ein in den Tragbalken einsetzbares Tragbalkenteil aufweist. Hierbei ist geplant, daß das Werkzeugmagazin als vormontierbare, modulare Baugruppe ausgebildet ist, welche alle für den Einsatz des Werkzeugmagazines notwendiges Element (Magazinantrieb, Bewegungsachse) umfaßt. Für Umrüstungszwecke ist es dabei vorteilhaft, die gesamte Werkzeugmagazin-Baugruppe gegen eine andere austauschbar auszugestalten, um die Rüstzeiten an der Werkzeugmaschine möglichst gering zu halten. Dabei besitzt das Werkzeugmagazin einen in den Tragbalken einsetzbares Tragbalkenteil, das die entsprechenden Schnittstellen (zum Beispiel mechanisch beziehungsweise elektrisch) besitzt.

Es ist von Vorteil, wenn das Magazin eine Aussparung im Bereich der Durchdringung des Tragbalkens aufweist. Zum Beispiel ist vorgesehen, daß die Aussparung größer ist als der Balkenquerschnitt, zuzüglich dem Hub eines Zylinders zur Positionierung des Werkzeugmagazines im Bezug auf die Bearbeitungsspindel. Damit das Magazin vormontierbar und einfach austauschbar ist, ist der Tragbalken vor und hinter dem Magazin mit einer Schnittstelle ausgestattet und als Tragbalkenteil ausgebildet.

Des Weiteren ist es in einer Variante der Erfindung von Vorteil, wenn das Werkzeugmagazin einen Bewegungsantrieb, zum Beispiel einen Arbeitszylinder aufweist, der die Bewegung des Werkzeugmagazins im Wesentlichen rechtwinklig zur Tragbalkenerstreckung, unter Ausnutzung der Aussparung, erlaubt. Diese Beweglichkeit des Werkzeugmagazines wird dann benötigt, wenn eine entsprechende Bewegungsachse der Bearbeitungsspindel beziehungsweise der Bearbeitungseinheit nicht zur Verfügung steht. Durch diesen Antrieb ist es möglich, das Werkzeugmagazin für den Wechselvorgang im Bereich der Bearbeitungsspindel zu positionieren. Die Erfindung legt sich dabei nicht darauf fest, ob sich das Werkzeugmagazin oberhalb, unterhalb oder seitlich neben der Bearbeitungsspindel befindet. Selbstverständlich ist es auch möglich, daß sowohl die Bearbeitungsspindel beziehungsweise die Bearbeitungseinheit, wie auch das Werkzeugmagazin je einen parallel verlaufenden Antrieb besitzen.

Günstigerweise wird als Bewegungsantrieb ein Arbeitszylinder eingesetzt. Dies ist zum Beispiel ein Hydraulikzylinder, es ist aber auch möglich, den Arbeitszylinder pneumatisch, zum Beispiel als Gewichtsausgleichzylinder auszubilden. Es sind aber auch elektromechanische Antriebe, zum Beispiel Elektromotor und Kugelrollspindel und so weiter, einsetzbar.

In diesem Zusammenhang ist es von Vorteil, daß das Werkzeugmagazin gegenüber den Bearbeitungsspindeln bewegbar ausgebildet ist. Neben den zuvor geschilderte Maßnahmen, bei welchen der Tragbalken das Werkzeugmagazin durchdringt, ist es selbstverständlich auch möglich, eine andere Anordnung zu wählen, bei welchen das Werkzeugmagazin anders gelagert, aber trotzdem bezüglich der Bearbeitungsspindeln zum Beispiel für Positionierzwecke bewegbar, insbesondere steuerbar positionierbar ausgebildet ist.

Alternativ zu der oben beschriebenen, erfindungsgemäßen Variante, in welcher der Tragbalken das Werkzeugmagazin durchdringt, ist es in einer weiteren Variante des Erfindung vorgesehen, daß das Werkzeugmagazin von einem Tragbalken gehalten ist, welcher sich im Wesentlichen rechtwinklig zur Achse der Bearbeitungsspindel erstreckt. Somit erstreckt sich zum Beispiel ein an dem Tragbalken gehaltenes, scheibenartiges Werkzeugmagazin gegebenenfalls in einer Ebene, die rechtwinklig zur Werkzeugspindelachse ist. Prinzipiell erreicht eine solche Anordnung des Werkzeugmagazins bereits mehrere, nebeneinander angeordnete Bearbeitungsspindeln.

Günstigerweise schlägt die Erfindung weiterhin vor, daß der Tragbalken eine Traverse zwischen den Ständern bildet, die ihrerseits Mittel zur Aufnahme des Werkstückes aufweist. Die Werkzeugmaschine ist ständerartig ausgebildet. An den Hauptständern befinden sich die Führungen für die Aufnahme des Werkstückes. An diesen Ständern ist eine Traverse für eine Verbindung der beiden Ständer angeordnet. Diese Traverse dient zunächst zur Aussteifung der Ständer untereinander und somit der Werkzeugmaschine überhaupt. Gleichzeitig ist es günstig, daß diese Traverse auch den Tragbalken bildet, welcher das Werkzeugmagazin trägt. Dadurch befindet sich das Werkzeugmagazin in unmittelbarer Nähe des Bearbeitungsraumes und nützt dabei in geschickter Weise das Maschinengestell gleich mit. Dabei ist es von Vorteil, wenn das Werkzeugmagazin, zum Beispiel wenn es scheibenartig ausgebildet ist, rechtwinklig zu den Achsen der Bearbeitungsspindel angeordnet ist. Hierdurch wird eine Kollision vermieden. Gleichzeitig dient ein Werkzeugmagazin einer Mehrzahl von Spindeln, beziehungsweise eine deutlich geringere Zahl von Werkzeugmagazinen sind vorzuhalten, als Bearbeitungsspindeln vorhanden sind.

Gemäß der Erfindung ist vorgesehen, daß das Werkzeugmagazin eine Magazintür aufweist, die im Falle des Werkzeugwechsels geöffnet ist. Üblicherweise ist das Werkzeugmagazin in einem Gehäuse eingebaut, um zu vermeiden, daß die Werkzeuge beziehungsweise die Werkzeugaufnahme durch ansonsten herumfliegende Partikel wie Späne und so weiter verunreinigt werden, was ein sicheres und zuverlässiges Aufspannen des Werkzeuges auf der Bearbeitungsspindel vereiteln könnte. Für den Wechselprozeß, bei welchem das zu wechselnde Werkzeug nicht mehr in Bearbeitung steht, wird die Magazintüre geöffnet. Die Magazintüre befindet sich dabei unterhalb des Magazines und oberhalb des Arbeitsraumes (vorausgesetzt, das Magazin befindet sich über dem Arbeitsraum beziehungsweise der Bearbeitungsspindel). Für die Öffnungsbewegung der Magazintüre wird nun die nächste Erfindung vorgeschlagen, daß von der Bewegung des Werkzeugmagazines auf den Tragbalken die Öffnungsbewegung der Magazintüre abgeleitet wird.

Diese erfindungsgemäße Weiterentwicklung spart die ansonsten bekannten, hydraulischen Türantriebe ein. Ein separates Ventil, ein Arbeitszylinder, ein Metallgewebedämpfer, ein Endschalter, Elektronik für die Schaltabfrage und so weiter entfallen. Durch die prinzipielle mechanische Ausbildung (dies kann zum Beispiel durch einen Riementrieb oder eine Hebelmechanik erfolgen), wird eine einfache, billige und zuverlässige Lösung vorgeschlagen. Dabei weist diese Lösung auch eine hohe Personensicherheit auf, da die Magazintüre von einer von der Steuerung überwachten Achse mitbewegt wird, die sowieso personensicher ist. Somit kann auch der Werkzeugwechsel bei offener Schutztüre der Werkzeugmaschine zugelassen werden. Dabei ist es möglich, beliebig große Türbreiten zu realisieren, da der Aufwand für einen größeren Arbeitszylinder, der sowieso für die Bewegung des Werkzeugmagazines auf dem Tragbalken benötigt wird, hierbei irrelevant ist.

Die Erfindung behält es sich vor, für den vorgenannten Gegenstand gegebenenfalls eigenständig und losgelöst von den übrigen Gedanken Schutz zu suchen.

Hierbei wird ebenfalls erfindungsgemäß eine Werkzeugmaschine vorgeschlagen, wobei für die insbesondere spanabhebende Bearbeitung von Werkstücken mehrere Bearbeitungsspindeln vorgesehen sind. Hierbei dient ein Werkzeugmagazin zum Vorhalten und Wechseln der Werkzeuge mindestens zweier Bearbeitungsspindeln.

Im Stand der Technik war es bekannt, daß bei Mehrspindel-Werkzeugmaschinen jeweils ein Magazin pro Spindel vorgesehen war. Dies führt zu einer entsprechend hohen Anzahl von Werkzeugmagazinen im Bereich der Spindel. Dies bedeutet, daß der sowieso schon knappe Arbeitsraum durch die hohe Anzahl von Werkzeugmagazinen weiter eingeengt wird.

Insbesondere wird in einer erfindungsgemäßen Variante vorgeschlagen, daß das Werkzeugmagazin als Kettenmagazin ausgebildet ist und die Kette endlos umzulaufen vermag und die Kette Werkzeugzangen zur Aufnahme der Werkzeuge trägt. Der Einsatz von Kettenmagazinen als Werkzeugmagazine ist im Stand der Technik bekannt. Alternativ dazu ist es auch bekannt, das Werkzeugmagazin als Scheibenmagazin auszubilden. Insbesondere ist es möglich, das Werkzeugmagazin mit einer ringartigen Scheibe auszustatten, wobei die Scheiben an ihren Außenseiten Werkzeugzangen zur Aufnahme der Werkzeuge trägt.

Die ringartige Ausgestaltung erlaubt es in einfacher Weise, eine drehbare Scheibe um den Tragbalken herum zu realisieren. In gleicher Weise ist es natürlich auch möglich, ein endlos umlaufendes Kettenmagazin zu gestalten, welches den Tragbalken umschließt und von diesem durchdrungen wird. Der Anmelder behält es sich vor, für diesen Gegenstand, losgelöst von der speziellen Anordnung des Tragbalkens, welcher das Werkzeugmagazin durchdringt, eigenständigen Schutz zu verlangen.

Die Erfindung vereint aber gerade in den beiden Vorschlägen erhebliche Vorteile, weil gerade dann, zum Beispiel bei Mehrspindelanwendungen, diese beiden, jeweils auch getrennt funktionierenden Vorschläge, zu einer erheblichen Platzeinsparung im Bearbeitungsraum führen.

Des Weiteren ist gemäß der Erfindung vorgesehen, daß die umlaufende Kette des Kettenmagazins oder die Scheibe die Ebene bestimmt. Üblicherweise ist die Scheibe eben ausgebildet und definiert dadurch die Ebene. Die Kette eines Kettenmagazins wird entlang einer Führung geführt, wobei in der Regel die Führung ebenfalls die Ebene definiert. Die Erfindung ist natürlich auch auf solche Systeme anwendbar, bei welchen die Kette derart beweglich ist, daß sich die Kette in mehreren Ebenen zu bewegen vermag, wobei jedoch in diesem Fall der Begriff der Ebene auf das hin verstanden sein soll, daß zumindest die im Bereich der Spindeln vorgehaltenen Werkzeuge wie auch die zu wechselnden Werkzeuge in einer Ebene sind, auch wenn die übrigen vorgehaltenen Werkzeuge in einer anderen Ebene, gegebenenfalls parallel zu der ersten, im Bereich der Werkzeugspindeln definierten Ebene sind. Auch diese Lösung wird von dem erfindungsgemäßen Vorschlag umfasst.

In diesem Zusammenhang schlägt die Erfindung auch vor, daß bei einer ringartigen Ausgestaltung des Werkzeugmagazins auf dem Ring eine zweite oder mehrere Reihen von Werkzeugen angeordnet sind. Selbstverständlich ist es möglich, das Werkzeugmagazin auch als Scheibe auszubilden.

In einer weiteren Ausgestaltung der Erfindung ist vorgesehen, daß die (ringartige) Scheibe an ihrer Außenseite rund oder mehreckig ausgebildet ist.

Gerade die mehreckige Ausgestaltung der Scheibe ist in einem Einsatz des Werkzeugmagazines bei Mehrspindelbearbeitungseinheiten von Vorteil, da die Werkzeuge so angeboten werden, wie sie von den Bearbeitungsspindeln aufgenommen werden.

Günstig ist es, wenn der Abstand der Zangen dem Abstand der Spindeln entspricht. Hierbei ist jeweils auf den Mittelabstand abzustellen, das heißt, das jeweilige Achsmaß ist einander gleich. Eine solche Ausgestaltung der Erfindung ist zum Beispiel mit einem Kettenmagazin möglich, wobei die jeweilige Kettenteilung dem Abstand der Bearbeitungsspindel entspricht. Dies ist aber auch bei einem als Scheibe ausgestatteten Werkzeugmagazin möglich. In diesem Fall werden auf jeder Seite der n-eckigen Scheibe so viele Zangen wie Spindeln oder m-Sätze mit k-Zangen in gerader Linie nebeneinander angeordnet. Entweder es werden dann alle k-Werkzeuge von den k-Spindeln aufgenommen oder die Spindel beziehungsweise das Werkzeugmagazin wird entsprechend zur nächsten freien oder belegten Zange zur Ablage oder Aufnahme eines Werkstückes weitergetaktet. Es ergibt sich zum Beispiel eine Werkzeuganordnung 1111-2222-3333, wobei gleiche Ziffern parallelen Einsatz der Werkzeuge an den jeweiligen Bearbeitungsspindeln bedeuten.

Alternativ hierzu ist es auch möglich, daß der Abstand der Spindel ein ganzzahliges Vielfaches des Zangenabstandes ist. In diesem Fall sind die Zangensätze (und damit verbunden auch die dazugehörigen Werkzeugsätze) alterierend angeordnet. Zum Beispiel sind die Werkzeuge wie folgt angeordnet: 1-2-3, 1-2-3 und so weiter. Der Vorteil dieser Ausgestaltung ist, daß nur eine kleine Relativbewegung zwischen der ersten Werkzeugzange und der Werkzeugspindel durchgeführt werden muß, um einen zweiten Werkzeugsatz anzubieten. Dies kann in kurzer Zeit erfolgen.

In einer weiteren, erfindungsgemäßen Variante ist vorgeschlagen, daß der Abstand der Bearbeitungsspindel variierbar ist. Zum Beispiel ist dies günstig, wenn ein anderes Werkzeugmagazin eingebaut worden ist, welches zum Beispiel eine höhere Dichte von Werkzeugen besitzt und der mittlere Abstand zwischen den Werkzeugzangen geringer ist. Dies führt dazu, daß der mittlere Abstand der Spindeln zu reduzieren ist. Um insbesondere einen gleichzeitigen Werkzeugwechsel durchführen zu können, ist es von Vorteil, den Abstand der Bearbeitungsspindel variierbar zu gestalten. Dies kann zum Beispiel durch eine entsprechende händische oder auch durch eine automatische Steuerung erfolgen. Zum Beispiel ist in einer solchen Variante ein Verstellantrieb vorgesehen, durch den der Abstand der Bearbeitungsspindeln variierbar ist. Gegenbenenfalls erfolgt so etwas automatisch, zum Beispiel aufgrund eines entsprechenden Datenaustausches, wenn nämlich die Steuerung den Typ des eingebauten Werkzeugmagazines erkennt und aufgrund des Types aus der Datenbank den Zangenabstand entnimmt und diese Information der Steuerung für den Verstellantrieb der Bearbeitungsspindeln zuleitet.

Im Sinne der Erfindung ist es dabei gleichbedeutend, ob der Abstand zwischen zwei Bearbeitungsspindeln der gleichen Bearbeitungseinheit oder aber der Abstand der Bearbeitungsspindeln zweier unterschiedlicher Bearbeitungseinheiten verändert wird. Die Möglichkeit, den Abstand der Bearbeitungsspindeln zu variieren, ist nicht nur bei dem Werkzeugwechsel beziehungsweise bei dem Austausch der Werkzeugmagazine von Vorteil, sondern wird auch bei der Bearbeitung selber eingesetzt. Ergibt es sich nämlich, daß auf der erfindungsgemäßen Werkzeugmaschine unterschiedliche Serien zu fertigen sind, so ist es möglich, durch eine Variation des Abstandes der Bearbeitungsspindeln, diese auf die unterschiedlichen Serien kurzfristig einzustellen. Dadurch wird erreicht, daß auch bei kleineren Serien eine hohe Zerspanleistung ohne aufwendige Rüstarbeiten zur Verfügung gestellt ist. Daraus ergibt es sich, daß es günstig ist, daß der Abstand der Bearbeitungsspindeln während der Bearbeitung und/oder während des Werkstückwechsels variiert wird. Üblicherweise kann es sich ergeben, daß die Spindeln in X-Richtung zueinander beweglich sind und so der Bearbeitungsspindelabstand variierbar ist. Natürlich ist es günstig, daß dieser Antrieb auch während der Bearbeitung für Bearbeitungszwecke einsetzbar ist.

Es ist vorgesehen, daß der Abstand der Bearbeitungsspindeln während der Bearbeitung variierbar ist und die Bearbeitungsspindeln für den Werkzeugwechsel in einen Werkzeugwechselabstand bringbar sind. Der Werkzeugwechselabstand bestimmt sich dabei zum Beispiel durch die Ausgestaltung des Werkzeugmagazins und der Anordnung der Werkzeuge auf diesem Magazin. Letztendlich ist die erfindungsgemäße Werkzeugmaschine vollkommen frei im Bezug auf die tatsächliche Anordnung der Werkzeuge im Werkzeugmagazin. Sie erlaubt einen hohen Grad an Einsatzmöglichkeiten am Werkstück und ist trotzdem in der Lage sogar verhältnismäßig komplexe Werkzeugwechseloperationen gleichzeitig platzsparend auszuführen.

Gerade der Einsatz des X-Antriebes während der Bearbeitung ergibt eine weitere Bearbeitungsachse, die zum Beispiel für den Wechselprozeß doppelt ausgenützt wird.

Erfindungsgemäße Werkzeugmaschinen besitzen durch die Mehrspindligkeit bereits eine höhere Zerspanleistung. Durch die höhere Zerspanleistung wird auch die Verweildauer des Werkstückes in der Werkzeugmaschine oder in einer die erfindungsgemäße Werkzeugmaschine umfassenden Bearbeitungslinie, Transferstraße oder Verkettung entsprechend gesenkt. Entscheident für die Leistungsfähigkeit einer Werkzeugmaschine, aber auch für komplexere Bearbeitungslinien sind nicht nur die Schneidoder Zerspanleistungen unmittelbar, sondern auch möglichst kurze Totzeiten, zum Beispiel während des Aus- und Einwechseln der Werkstückes beziehungsweise dem Umrüsten der Werkzeuge. Die Erfindung erreicht einen erheblichen Zeitvorsprung, wenn der Werkzeugwechsel an zumindest zwei Bearbeitungsspindeln gleichzeitig erfolgt. Durch diesen erfindungsgemäßen Vorschlag werden die Rüstzeiten erheblich reduziert und die Effizienz beziehungsweise Leistung der Werkzeugmaschine entsprechend gesteigert.

Durch eine Einstellmöglichkeit des Spindelabstandes wirkt dieser Vorteil, unabhängig von der konkreten Ausgestaltung des Zangenabstandes, auf das Werkzeugmagazin. Die Flexibilität einer solchen erfindungsgemäßen Werkzeugmaschine steigt erheblich.

Günstigerweise befindet sich dabei die Bearbeitungsspindel einer Bearbeitungseinheit auf einer Führung, derart, daß der Abstand zwischen den Bearbeitungsspindeln veränderbar ist.

Neben der Möglichkeit, den Abstand der Bearbeitungsspindeln zu variieren, ist es gemäß der Erfindung aber auch möglich, den Abstand der Zangen zueinander zu variieren. Somit ist es möglich, verschiedene Werkzeugmagazine variabel auf unterschiedlichen, erfindungsgemäß ausgestatteten Werkzeugmaschinen einzusetzen und durch eine entsprechende Änderungen des jeweiligen Zangenabstandes diesen den jeweiligen spezifischen Abständen der Bearbeitungsspindeln anzupassen.

Sehr günstig ist es, wenn die Zangen in einer Linearführung verschieblich gelagert sind und ein Zangenverstellantrieb den Abstand der Zangen voneinander ändern. Hierdurch ist es prinzipiell möglich, daß auch der Zangenabstand automatisch zum Beispiel über die Steuerung veränderbar ist.

Weite erfindungsgemäße Ausgestaltungen sind in den Unteransprüchen beschrieben. Die Erfindung ist schematisch in der Zeichnung gezeigt. Es zeigen:
- Fig. 1: in einer dreidimensionalen Ansicht die erfindungsgemäße Werkzeugmaschine;
- Fig. 2: eine Frontansicht nach Fig. 1;
- Fig. 3, 4, 5, 6, 7, 8, 9, 10, 11, 12, 13, 14 und 18: verschiedene Details des Werkmagazins der erfindungsgemäßen Werkzeugmaschine, jeweils in einer Ansicht;
- Fig. 15, 16, 17: Details des Werkzeugmagazintürantriebes der erfindungsgemäßen Werkzeugmaschine in einer Ansicht;
- Fig. 19: in einer weiteren, dreidimensionalen Ansicht die erfindungsgemäße Werkzeugmaschine;
- Fig. 20: eine Draufsicht auf einer weitere Variante der Erfindung und
- Fig. 21: eine Rückansicht nach Fig. 20.

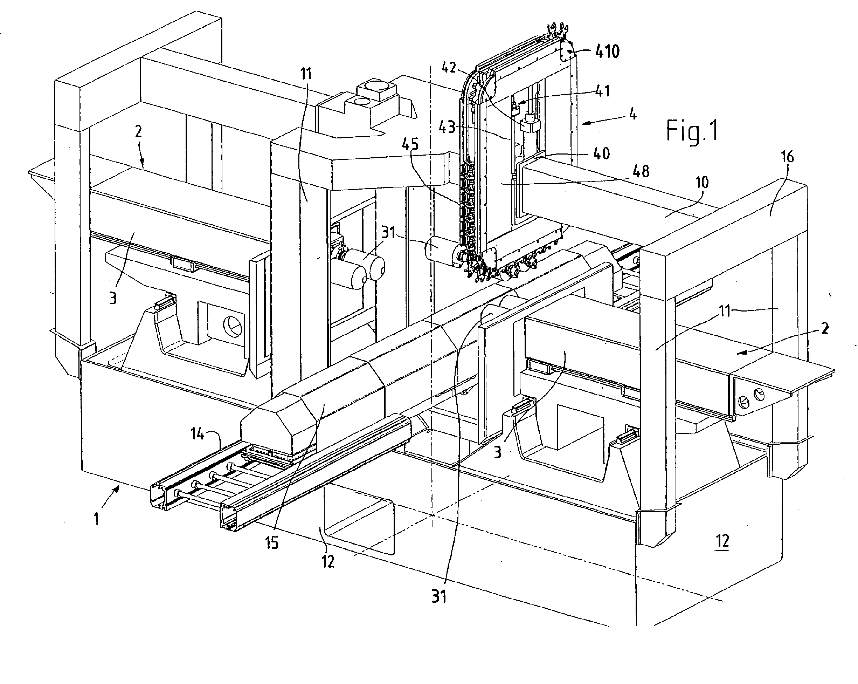

In Fig. 1 ist die erfindungsgemäße Werkzeugmaschine schematisch dargestellt. Die zu bearbeitenden Werkstücke befinden sich auf der Transportbahn 14. Sie befinden sich von einem Spanschutztunnel 15 verdeckt zum Beispiel auf einer Durchfahrt durch diese Werkzeugmaschine. Zur besseren Übersichtlichkeit ist das zu bearbeitende Werkstück nicht dargestellt.

Mit 2 ist je eine Bearbeitungseinheit dargestellt. Die Bearbeitungseinheiten erstrecken sich in diesem Ausführungsbeispiel beidseitig auf unterschiedlichen Seiten der Bearbeitungsbahn 14. Das zu bearbeitende Werkstück würde sich zwischen den beiden Bearbeitungseinheiten 2 befinden. Jede dieser Bearbeitungseinheiten weist in dem hier dargestellten Ausführungsbeispiel zwei Bearbeitungsspindeln 3 auf. Diese sind in dem hier gezeigten Ausführungsbeispiel von dem Gehäuse der Bearbeitungseinheit 2 verdeckt.

Die komplette Werkzeugmaschine ruht auf einem Maschinenbett 12. Das Maschinenbett erstreckt sich dabei beidseitig der Transportbahn 14. Das Maschinenbett weist mehrere Ständer 11 auf, die die Bearbeitungseinheiten überragen. Die Ständer 11 tragen über einen Querholm 16 den Tragbalken 10. Der Tragbalken 10 ist dabei beidseitig der Transportbahn letztendlich auf den Ständern 11 gelagert und versteift die erfindungsgemäße Werkzeugmaschine.

Der Tragbalken 10 trägt das Werkzeugmagazin 4. Es ist gut zu erkennen, daß der Tragbalken 10 das Werkzeugmagazin durchdringt. Ebenfalls ist es gut zu erkennen, daß ein Teil der Werkzeuge 31 in dem Werkzeugmagazin 4 unterhalb des Tragbalkens 10, und ein anderer Teil der Werkzeuge 31 oberhalb des Tragbalkens 10 vorgehalten wird. Der Tragbalken 10 ist hierbei im Wesentlichen parallel zur Spindelachse 30 der Bearbeitungsspindel 3. Dies führt zu einfachen, konstruktiven Gegebenheiten, da die jeweiligen Bewegungen zueinander rechtwinklig erfolgen.

Dadurch wird erreicht, daß im Arbeitsraum 13, in welchem die Werkzeugspindel auf das Werkstück einwirkt, nur die tatsächlich benötigten Werkzeuge für einen Werkzeugwechsel vorgehalten werden. Andere Werkzeuge sind aufgrund der Bewegbarkeit des Werkzeugmagazines nach oben ausgelagert und werden bei Bedarf hereinbewegt.

Das Ausführungsbeispiel in Fig. 1 stellt ein Werkzeugmagazin dar, welches als Kettenmagazin 45 ausgebildet ist. Auf einen im Wesentlichen rechteckigen Rahmen läuft eine Kette 405 endlos um.

Hierbei ist es günstig, daß der Tragbalken 10 zur Aussteifung der Werkzeugmaschine 1 dient. Der Tragbalken 10 liegt dabei zum Beispiel auf den Ständern 11 auf, die auch zur Führung des Werkstückschlittens 17 dienen. Dies ist besonders dann vorteilhaft, wenn zu beiden Seiten des Transportbandes beziehungsweise dieser Ständer Bearbeitungseinheiten vorgesehen werden. Denn hier müssen die Ständer wegen einer ausreichenden Zugänglichkeit zur Bearbeitung verhältnismäßig filigran sein. Auch in diesem Fall steift der Tragbalken 10 die Maschine aus.

Gemäß der Erfindung ist vorgesehen, daß zumindest ein Teil der vorgehaltenen Werkzeuge 31 und die zu wechselnden Werkzeuge 31 in einer Ebene 410 angeordnet sind.

In der in Fig. 1 dargestellten Ausgestaltung des Werkzeugmagazines 4 als Kettenmagazin 45 wird die Ebene 410 durch die Führungsbahn der Werkzeugkette definiert. In der in Fig. 1 gezeigten Ausgestaltung des Werkzeugmagazins 4 ist dabei das Kettenmagazin 45 im wesentlichen rechtwinklig aufgebaut. Es können dabei aber auch beliebige andere Geometrien zum Einsatz kommen. Die Kanten des Rechteckes sind dabei Bestandteil der Ebene 410. Der Vorteil der Ausgestaltung als Kettenmagazin 45 liegt bei der erfindungsgemäßen Variante darin, daß die für mehrere Spindeln 3 zu wechselnden Werkzeuge 31 bei einer entsprechenden geraden Anordnung der jeweiligen Führungsbahn des Kettenmagazins 45 automatisch bereits parallel nebeneinander in der Ebene 410 angeordnet und der Werkzeugpindel angeboten werden.

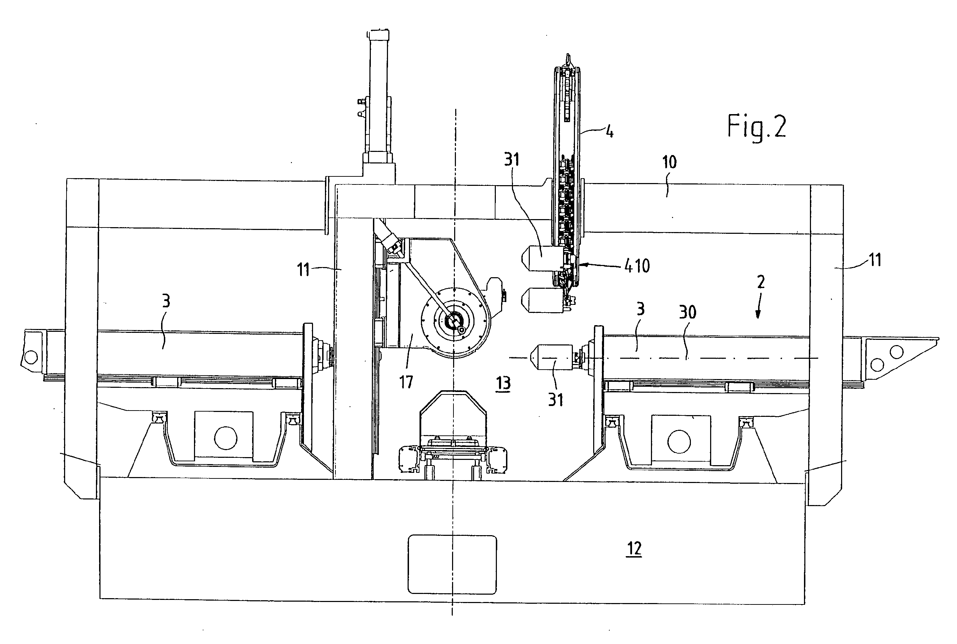

Insbesondere in Fig. 2 ist deutlich zu erkennen, daß sich der Tragbalken 10 oberhalb der Bearbeitungseinheit 2 erstreckt. Es ist alternativ auch möglich, den Tragbalken seitlich neben der Bearbeitungseinheit beziehungsweise der Bearbeitungsspindel anzuordnen. Die Anordnung oberhalb der Transportbahn 14 ist günstig, da dadurch der Tragbalken nicht mit der Transportbahn kollidiert und überhalb der Maschinen in der Regel ausreichend Platz zur Verfügung steht. Dabei ist es auch von Vorteil, daß der Tragbalken 10 auch den Bearbeitungsraum 13 überspannt. In diesem Fall stützt sich der Tragbalken auf Ständern 11 ab, die bezüglich der Transportbahn 14 auf der gegenüberliegenden Seite angeordnet ist, wohingegen das Werkzeugmagazin auf der anderen (rechten) Seite (in Fig. 2) angeordnet ist. Es ist gut zu erkennen, daß die Ebene 410 in diesem Ausführungsbeispiel etwas nach links versetzt gegenüber den in der Bearbeitungsspindel 3 eingesetzten Werkzeugen 31 ist. Bei dieser Seitenansicht befinden sich mehrere Werkzeugspindeln 3 auf der rechten Seite hintereinander und definieren so eine Verbindungslinie, die in diesem Fall nicht Teil der Ebene 410 aber zu dieser parallel sind. Dabei zählen auch die noch zu wechselnden Werkzeuge 31 zu der Ebene 410, so lange diese sich im Werkzeugmagazin befinden. Diese Anordnung ist sowohl bei einem scheiben- oder ringförmigen Werkzeugmagazin 4 einsetzbar wie auch bei einem Kettenmagazin 45.

Des Weiteren ist es von Vorteil, daß das Werkzeugmagazin 10 vertikal absenkbar ist. Eine solche Ausgestaltung ist dann von Vorteil, wenn, wie in dem hier gezeigten Ausführungsbeispiel, die Bearbeitungseinheit beziehungsweise die Werkzeugspindel keinen vertikalen Stellantrieb aufweist. In dem hier gezeigten Beispiel wird dies durch den Werkstückschlitten 17 geleistet. Um die zu wechselnden Werkzeuge 31 in dem Bereich der Bearbeitungsspindel 3 zu bringen, ist es dabei günstig, das Werkzeugmagazin 4 abzusenken.

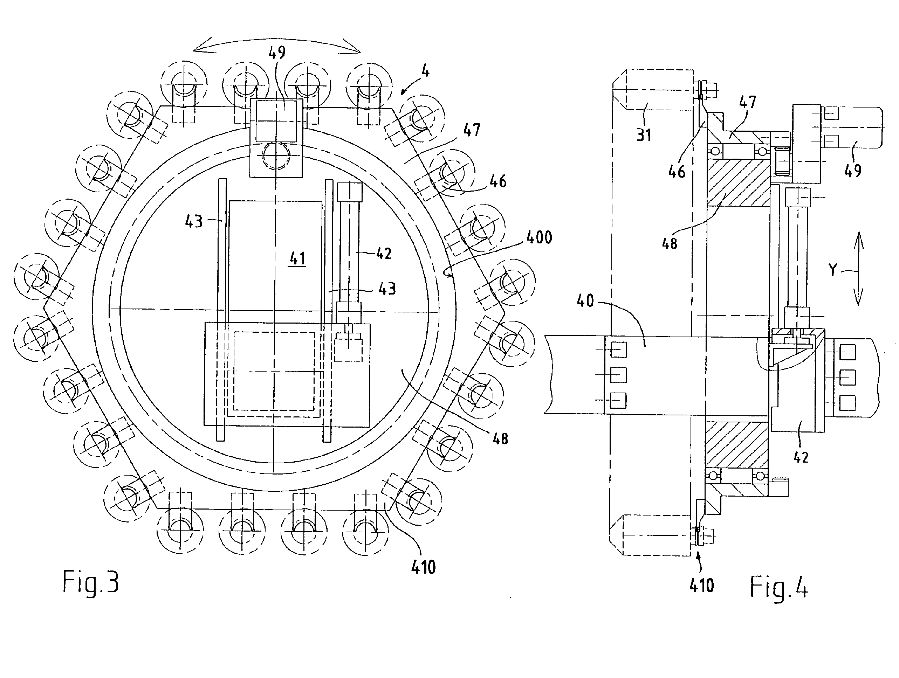

Der spezielle Aufbau eines Werkzeugmagazines gemäß der Erfindung wird prinzipiell mit Hilfe der Figuren 3 und 4 erläutert. Die Fig. 3 zeigt hierbei in Ansicht ein als ringartige Scheibe 47 ausgestaltetes Werkzeugmagazin, welches aber bezüglich des Anschlußes an den Tragbalken 10 in gleicher Weise ausgeführt ist, wie das in Fig. 1 gezeigte Kettenmagazin.

In Fig. 3 bzw. Fig. 4 wird die Ebene 410 durch die ringartige Ausgestaltung des Werkzeugmagazines 4 definiert.

In Fig. 4 ist eine Seitenansicht, teilweise geschnitten, gezeigt. Das Werkzeugmagazin 4 ist als Modul ausgestaltet und erlaubt einen schnellen Austausch in der Werkzeugmaschine. Da erfindungsgemäß vorgeschlagen ist, das Werkzeugmagazin 4 von dem Tragbalken 10 durchdringen zu lassen, wird vorteilhafterweise das Werkzeugmagazin 4 so realisiert, daß dieses ein lösbares Tragbalkenteil 40 aufweist, welches an entsprechenden Schnittstellen in den Tragbalken 10 einsetzbar ist.

Das Werkzeugmagazin besitzt eine Aufnahme 48. Diese bewegt sich bezüglich der die Werkzeuge aufnehmenden Werkzeugzangen 46 nicht und stellt somit eine stillstehende Anbaufläche dar, die man zum Beispiel zum Anbau von Werkzeugprüfeinrichtungen, Magazinzangenbetätigungseinrichtungen und so weiter nutzen kann.

Die Aufnahme 48 besitzt eine Aussparung 41, die seitlich von Führungen 43 begrenzt ist. Das Tragbalkenteil 40, welches eine ansonsten vorgesehene Lücke im Tragbalken 10 schließt, ist entlang dieser Führung 43 in der Aussparung 41 beweglich. Umgekehrt bedeutet dies, daß die Aufnahme 48 bezüglich des Tragbalkens 10 beweglich ist. Hierfür ist ein linearer Bewegungsantrieb 42 vorgesehen. Der Bewegungsantrieb 42 ist zum Beispiel ein Hydraulik- oder Pneumatikzylinder, es kann aber auch ein mechanischer Antrieb sein. Durch diesen Bewegungsantrieb 42 wird erreicht, daß das Werkzeugmagazin 4 zum Wechseln der Werkzeuge 31 in dem Bereich der Spindel 3 absenkbar ist. Um die nicht rotierende Aufnahme 48 ist die ringartige Scheibe 47 drehbar gelagert (Fig. 4). Die ringartige Scheibe 47 trägt über Werkzeugzangen 46 die Werkzeuge 31.

Die vorgenannte Lösung erlaubt eine sehr platzsparende Anordnung einer großen Anzahl von Werkzeugen 31 nahe am Bearbeitungsraum 13.

Es ist von Vorteil, daß die Werkzeugmaschine 1 mindestens zwei Bearbeitungseinheiten 2 besitzt. Diese erlauben eine variable Bearbeitung des Werkstückes. Insbesondere ist es dabei günstig, daß die Bearbeitungseinheiten 3 von unterschiedlichen Seiten her das Werkstück bearbeiten, wie das zum Beispiel in Fig. 1 beziehungsweise in Fig. 2 gezeigt ist.

In diesem Zusammenhang ist es von Vorteil, daß das Werkzeugmagazin auf dem Tragbalken verfahrbar ist. Es ist daraus prinzipiell möglich, daß das Werkzeugmagazin zum Wechseln der Werkzeuge der Bearbeitungsspindel mehrerer Bearbeitungseinheiten dient. In diesem Ausführungsbeispiel versorgt somit das Werkzeugmagazin zwei Bearbeitungseinheiten mit gegebenenfalls unterschiedlich orientierten Spindeln, was aber durch das Werkzeugmagazin beziehungsweise die daran vorgesehenen Zangen in einfacher Weise kompensiert wird, indem diese geeignet sind, die Werkzeuge in zwei Richtungen zu fassen.

Ählich wie bei der erfindungsgemäßen Lösung, daß ein Werkzeugmagazin zum Vorhalten und Wechseln der Werkzeuge mindestens zweier Bearbeitungsspindeln dient, dient auch die vorgenannte Lösung zu einer effektiven Ausnutzung des knappen Raums am oder im Bearbeitungsraum.

In einer weiteren bevorzugten Ausgestaltung der Erfindung ist vorgesehen, daß an der Aufnahme 48 ein Antrieb 49 für das Werkzeugmagazin 4, insbesondere ein Kettenantrieb oder ein Rotationsantrieb für die Scheibe 47 vorgesehen ist. Dieser Antrieb 49 dient dazu, die jeweils benötigten Werkzeuge 31 zum Einwechseln oder Leerplätze zum Auswechseln nicht mehr benötigter Werkzeuge an die Bearbeitungsspindel heranzutransportieren.

Insbesondere die Lösung bei einer ringartigen Scheibe (entweder rund oder vieleckig) führt in einfacher Weise zu einer einfachen Übersetzung. Die ringartige Scheibe 47 weist dabei auf ihrer Innenseite 400 einen Zahnkranz auf und der Zahnkranz wirkt zusammen mit dem Ritzel des Rotationsantriebes 49.

Für die Aufnahme der Werkzeuge 31 sind am Rand der Scheibe 47 Werkzeugzangen 46 mit entsprechendem Abstand angeordnet. Der Abstand der Zangen 46 ist dabei so gewählt, daß er dem Abstand der Spindeln 3 entspricht.

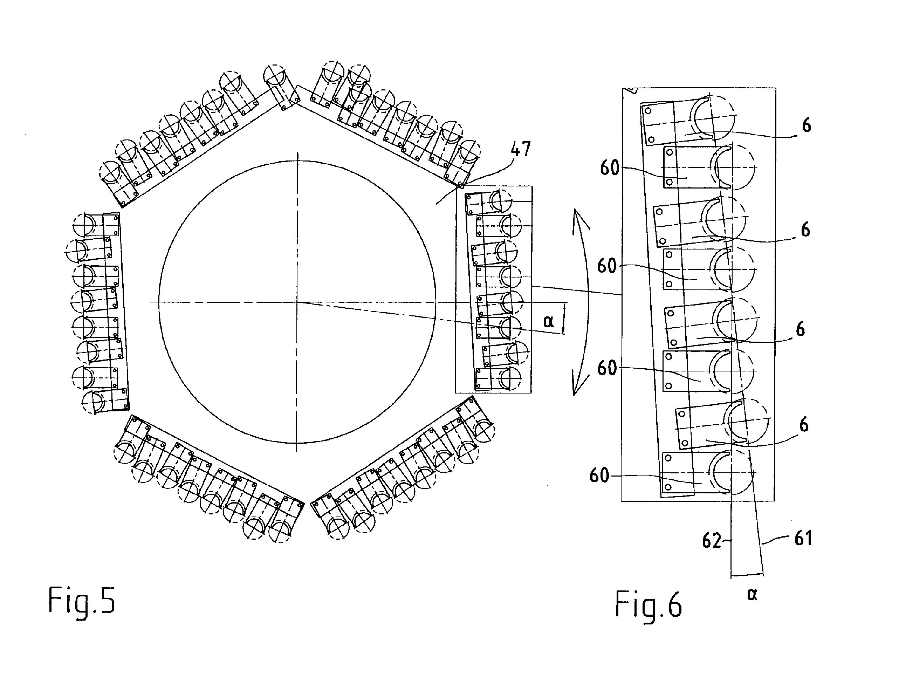

In Fig. 5, 6 ist eine vorteilhafte Variante der Ausgestaltung des Werkzeugmagazins nach der Erfindung dargestellt. Auf den ersten Blick scheinen die Werkzeugzangen 46 auf dieser als Sechseck ausgebildeten Scheibe 47 keine Ordnung zu besitzen. Tatsächlich aber sind sie in sehr intelligenter und effektiver Weise zueinander ausgerichtet. Dies wird in der als Fig. 6 dargestellten Vergrößerung deutlich.

Auf jeder der Seiten des in Fig. 5 gezeigten Sechseckes sind jeweils acht Werkzeugzangen angeordnet. Diese unterteilen sich in zwei Zangensätze 6, 60. Der erste Zangensatz 6 unterscheidet sich von dem zweiten Zangensatz 60 derart, daß die Vorderkanten der jeweiligen zu einem Zangensatz gehörenden Zangen auf einer gemeinsamen Zangenlinie 61, 62 liegen. Die Zuordnung der verschiedenen Zangen auf die jeweiligen Zangensätze ist alternierend derart, daß die erste Zange zu Zangensatz eins, die zweite Zange zu Zangensatz zwei, die dritte Zange zu Zangensatz eins und so weiter zugeordnet ist.

Der Ablauf ist nun wie folgt. Wenn die Werkzeugspindeln die vier ersten Werkzeuge in dem ersten Zangensatz 6 zurückgelegt haben, taktet die Scheiben 47 um den Winkel α, der zwischen den ersten und zweiten Zangenlinie 61, 62 besteht, weiter, zu dem zweiten Zangensatz 60. Dann werden die Bearbeitungsspindeln mit dem zweiten Werkzeugsatz 60 geladen. Bis zum nächsten Wechsel taktet die Scheibe um einen größeren Winkel zu einer anderen Seite des Sechseckes. Dieses Weitertakten erfolgt zum Beispiel während der Bearbeitung und benötigt somit keine zusätzliche Zeit.

Der Vorteil dieser Ausgestaltung liegt darin, daß gleichzeitig für eine größere Anzahl von Spindeln in schneller Zeit das jeweils benötigte Werkzeug gleichzeitig eingewechselt werden kann. Das in Fig. 5 dargestellte Ausführungsbeispiel zeigt 2 x 4 Zangen. Es ist aber auch möglich, jeweils k Zangen in einem Zangensatz zusammenzufassen, wobei k eine ganze Zahl ist.

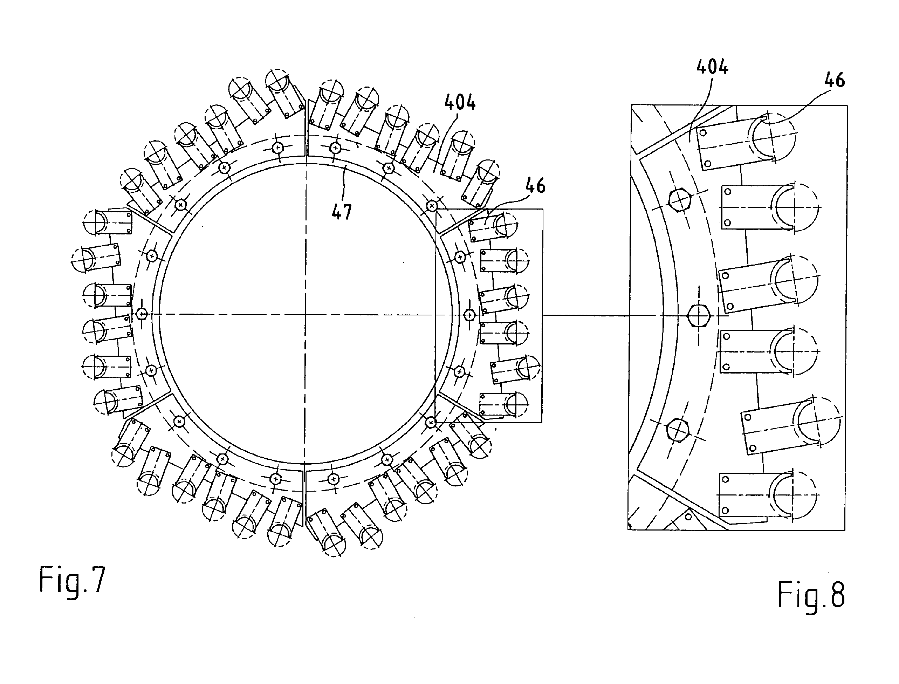

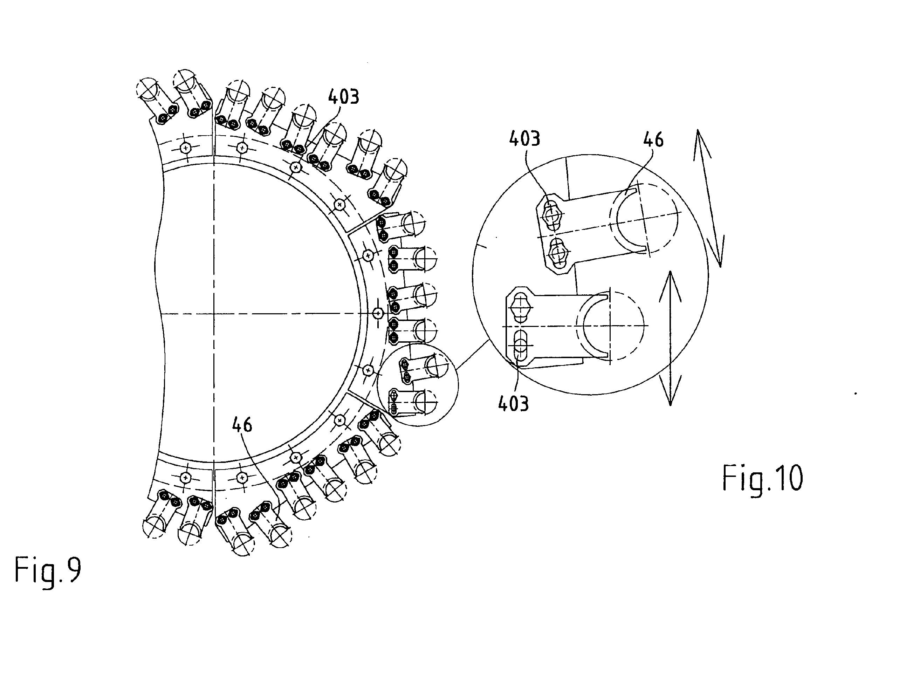

In Fig. 7, 8 ist eine weitere Variante der Erfindung gezeigt. Auch hier bedeutet die Fig. 8 eine Vergrößerung eines Details nach Fig. 7. In diesem Ausführungsbeispiel sind Zangenplatten 404 vorgesehen, die eine oder mehrere Zangen 46 beziehungsweise Zangensätze 6, 60 tragen, wobei die Zangenplatte 404 als Ganzes mit der Scheibe 47 verbindbar ist. Dabei wird die Platte 404 mit Schrauben und Muttern auf der Scheibe 47 befestigt. Diese erfindungsgemäße Weiterentwicklung erlaubt einen leichten und einfacheren Austausch einer größeren Zahl von Zangen oder ganzer Zangensätze. Für eine gewisse Einstellbarkeit ist es günstig, wenn die Zangen 46 in Langlöchern 403 geführt und gehalten sind. Dies ist zum Beispiel in Fig. 9, 10 gezeigt, wobei auch hier Fig. 10 eine Vergrößerung eines Teils nach Fig. 9 ist. Dabei besitzt die Zangenaufnahme, also der Bereich an welchem die Zange 46 an der Scheibe anschließt, ein Langloch 403. Dies erlaubt eine gewisse Einstellbarkeit der Lage der Zange und Anpaßbarkeit bezüglich des Spindelabstandes. Die Langlöcher können dabei auch auf der Scheibe 47 oder der Platte 404 angeordnet sein.

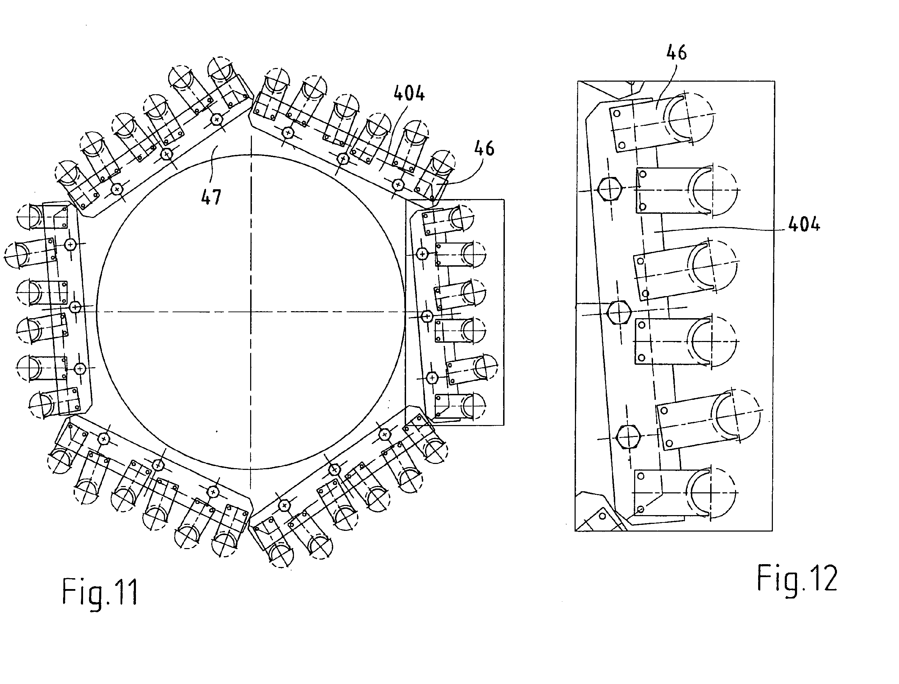

Ähnlich wie Fig. 7, 8 zeigt auch Fig. 11, 12 den Einsatz einer Zangenplatte zur Aufnahme einer größeren Anzahl von Zangen 46. Die in Fig. 11 gewählte Zangenplatte ist eher rechteckig ausgebildet, wohingegen der Vorschlag nach Fig. 7 eine konkave Zangenplatte 404 zeigt.

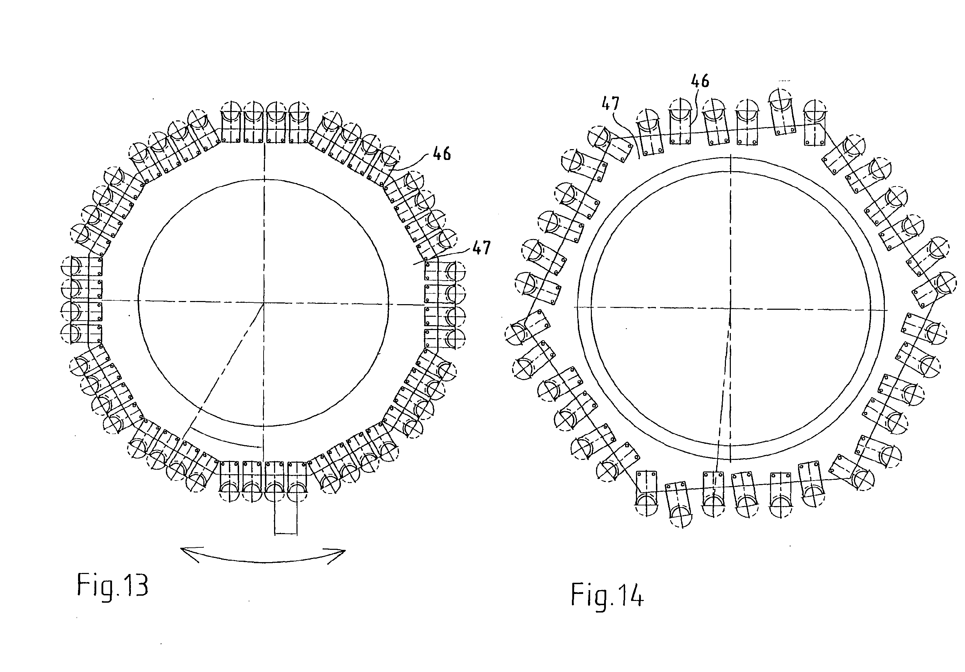

In Fig. 13, 14 sind zwei verschiedene Konzepte für das Anbieten der ein- und auszuwechselnden Werkzeuge angedeutet. In dem Beispiel nach Fig. 13 sind achtundvierzig Werzeuge in einem Zwölfeck mit vier Zangen pro Seite vorgesehen. Eine solche Anordnung ist zum Beispiel dann einsetzbar, wenn ein Einspindler durch Verfahren entlang der X-Achse jeweils vier Werkzeuge erreicht. Erst dann ist ein Weitertakten der Scheibe notwendig. Alternativ ist es aber auch möglich, mit dem hier dargestellten Beispiel eine Vierspindler-Maschine zu betreiben, wobei parallel zueinander vier Werkzeuge zum Ein- beziehungsweise Auswechseln angeboten werden. In diesem Fall ist dann das Werkzeug um 30° weiterzutakten, um nach der Abgabe von Werkzeugen neue Werkzeuge entgegenzunehmen.

Hiergegen schlägt die Lösung nach Fig. 14 sechsunddreißig Werkzeugzangen vor, die an einem Sechseck orientiert angeordnet sind und pro Seite jeweils in zwei winklig zueinander verstellten Zangensätze gruppiert sind. Die Anordnung entspricht hier dem in Fig. 5 oder 6 Ausgeführtem.

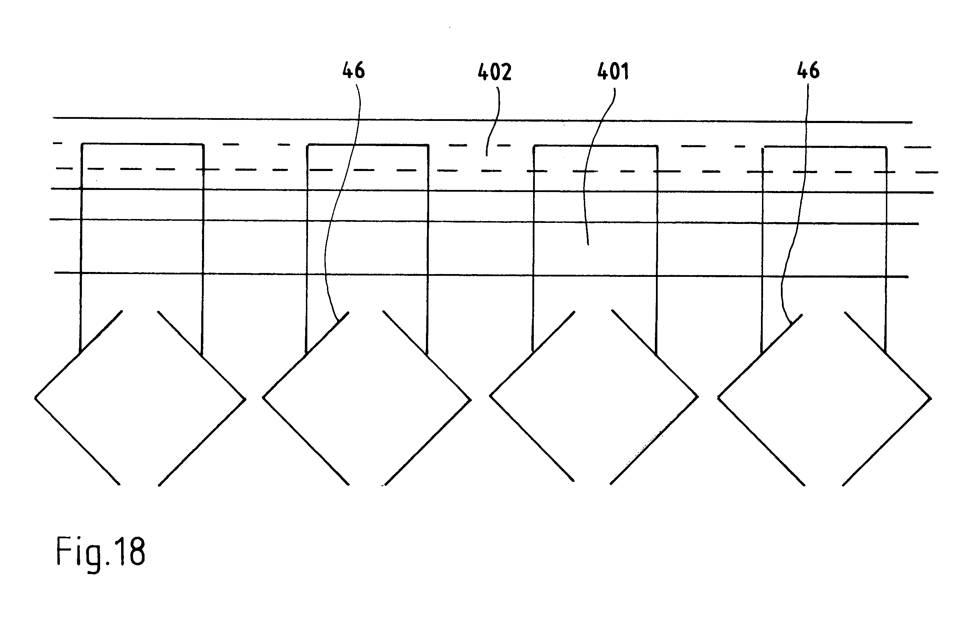

Fig. 18 zeigt eine Möglichkeit, den Zangenabstand im Werkzeugmagazin 4 stufenlos zu verändern. Dargestellt ist ein Ausschnitt der Magazinscheibe, zum Beispiel eine Seite eines Sechseckes. Vier Zangen 46 sind in einer Linearführung 402 verschieblich gelagert. Sie sind untereinander durch einen Gewindetrieb 401 verbunden. Dieser Gewindetrieb hat für die verschiedenen Zangen entweder ein Links- oder ein Rechtsgewinde. Dabei ist die Gewindesteigung der Zangen jeweils unterschiedlich. Wird nun die Spindel gedreht, so ändert sich der Zangenabstand gemäß Steigung, Steigungsdifferenz und Steigungsrichtung der Gewinde. Dabei ist es möglich, die Spindel manuell oder automatisch zu verstellen. Sie kann selbsthemmend ausgebildet sein, alternativ können die Zangen nach Verstellung in der Führung geklemmt werden.

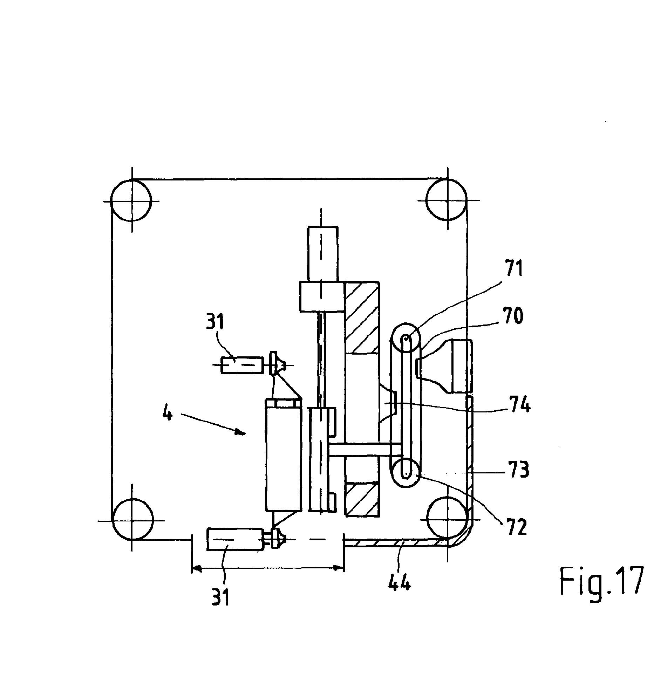

In Fig. 17 ist eine Variante gezeigt, wie die Öffnungsbewegung der Magazintüre 44 von der Bewegung des Werkzeugmagazines 4 abgeleitet ist.

Üblicherweise befindet sich die Magazintür 44 unterhalb des Magazines 4 und somit oberhalb des Arbeitsraumes 13. Dazu wird der Magazinhub nach oben über das mindesterforderliche Maß hinaus verlängert, die Magazintür 44 ist zum Beispiel als Aluminium-Gliederbandtüre ausgebildet. Der Antrieb der Türe erfolgt über ein Zugmittel 70. Der Riemen 70 läuft über zwei Rollen 71, 72 die mit dem Werkzeugmagazin 4 mitbewegt werden. Ein Riementrum ist ortsfest 74 geklemmt, das andere mit der als Gliederband 73 ausgestalteten Werkzeugmagazintüre 44 verbunden. Dadurch macht das Band 73 den doppelten Hub des Magazines 4. Das Werkzeugmagazin 4 kann die Türe 44 erst dann durchfahren, wenn die Türe ganz geöffnet ist. Daher ist der Magazinhub um den halben Türöffnungshub zu vergrößern. Der Vorteil dieser Ausgestaltung ist, daß hier kein eigener Türantrieb mit Abfrageeinrichtung und so weiter notwendig ist. Darüberhinaus hat das Werkzeugmagazin schon volle Geschwindigkeit erreicht, wenn es in den Arbeitsraum 13 der Maschine eindringt.

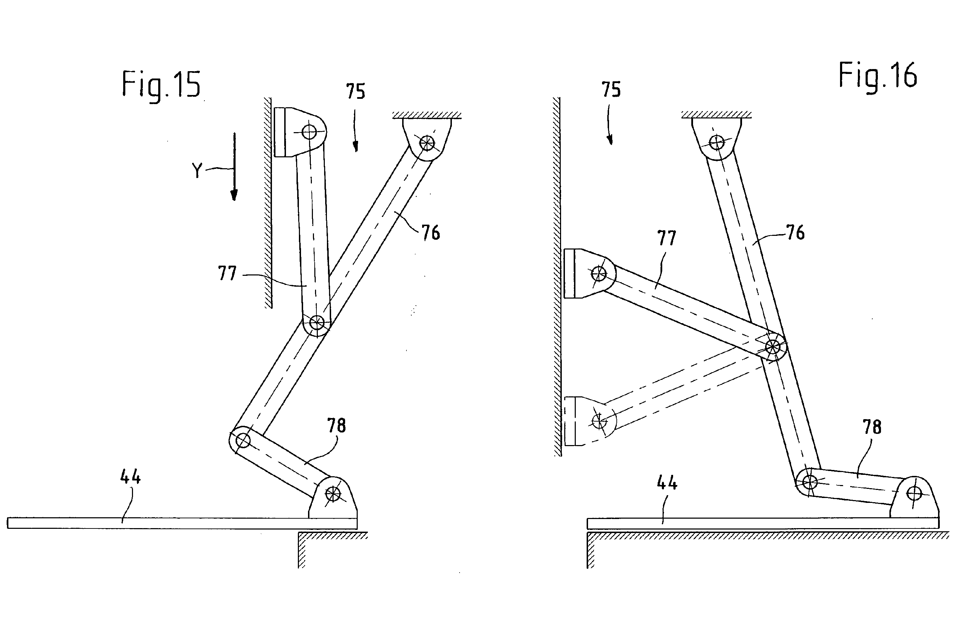

Alternativ zu der nach Fig. 17 vorgestellten Riemenanordnung kann die Türe 44 auch mit einer Hebemechanik (siehe Fig. 15, 16) angetrieben werden. Die in Fig. 15, 16 dargestelle Hebelmechanik wird dabei so ausgelegt, daß nach dem halben Magazinweg ein Totpunkt erreicht wird und die Tür sich in der zweiten Hälfte des Magazinweges nur noch wenig bewegt. Dadurch ist es möglich die Türe aus festem Blech anstelle einer Gliederschürze und so weiter auszuführen. In Fig. 15 ist die geschlossene, in Fig. 16 die geöffnete Magazintüre 44 gezeigt.

Die in Fig. 15, 16 dargestellte Hebelmechanik 75 besteht aus drei Hebeln 76, 77 und 78. Der Hebel 78 schließt an die Türe 44 an und ist gelenkig verbunden mit dem Hebel 76, der zum Beispiel ortsfest gelagert ist. Am Hebel 76 ist gelenkig der Hebel 77 angeschlossen, der zum Beispiel mit dem Werkzeugmagazin 4 verbunden ist. Durch die dargestellte Vertikalbewegung (Y-Pfeil in Fig. 15) wird der Hebel 77 nach unten versetzt und entgegen dem Uhrzeigersinn verschwenkt. Er zieht somit den Hebel 76 ebenfalls entgegen der Uhrzeigerrichtung. Diese Bewegung wird durch den Hebel 78 auf die Türe 44 umgelenkt, die zum Beispiel in einer Führung gehalten ist und eine Linearbewegung nach rechts zum Öffnen ausführt. Somit kann eine Öffnungsbewegung für die Werkzeugmagazintüre 44 von der Vertikalbewegung Y des Werkzeugmagazines 4 geschickt abgeleitet werden.

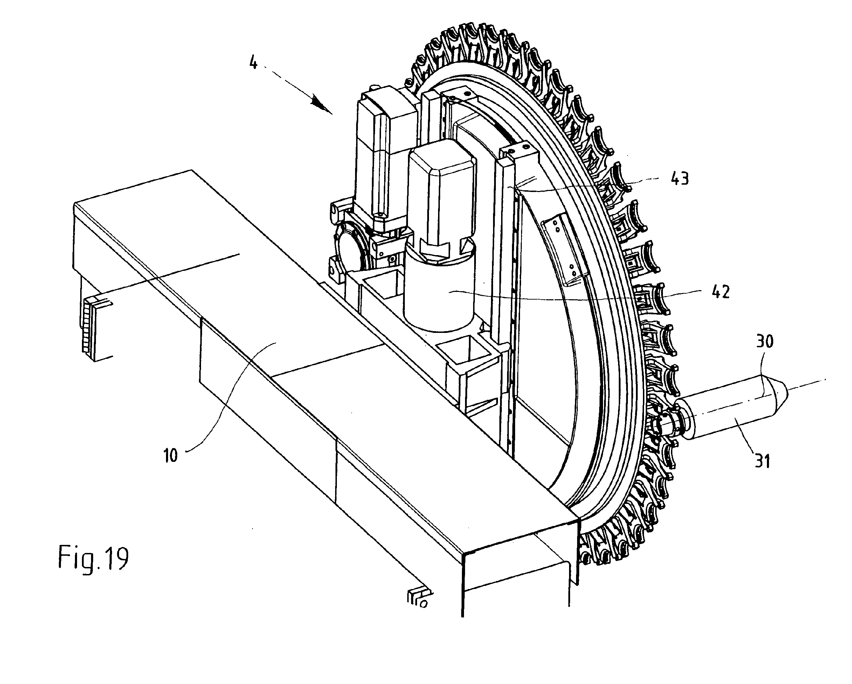

In Fig. 19 ist eine Variante zu der Erfindung gemäß Fig. 1 gezeigt. In Fig. 1 durchdringt der Tragbalken 10 das Werkzeugmagazin 4. In Fig. 19 erstreckt sich das Werkzeugmagazin im Wesentlichen parallel zu dem Tragbalken. Der Tragbalken 10 durchdringt das Werkzeugmagazin nicht. Die Spindelachse 30 ist in dem Werkzeug 31 schematisch angedeutet. Sie verläuft im Wesentlichen rechtwinklig zu dem Tragbalken 10. Der Tragbalken 10 ist wiederum Teil des Maschinengestells und befindet sich zum Beispiel zwischen zwei Ständern 11, die ihrerseits den Werkstückschlitten 17 tragen.

Die in Fig. 19 gezeigte Anordnung ist auch insbesondere dann von Vorteil, da hierdurch das Werkzeugmagazin gleichzeitig mehreren, zu der Achse 31 parallel angeordneten Bearbeitungsspindeln zum Wechseln des Werkzeuges angeboten werden kann.

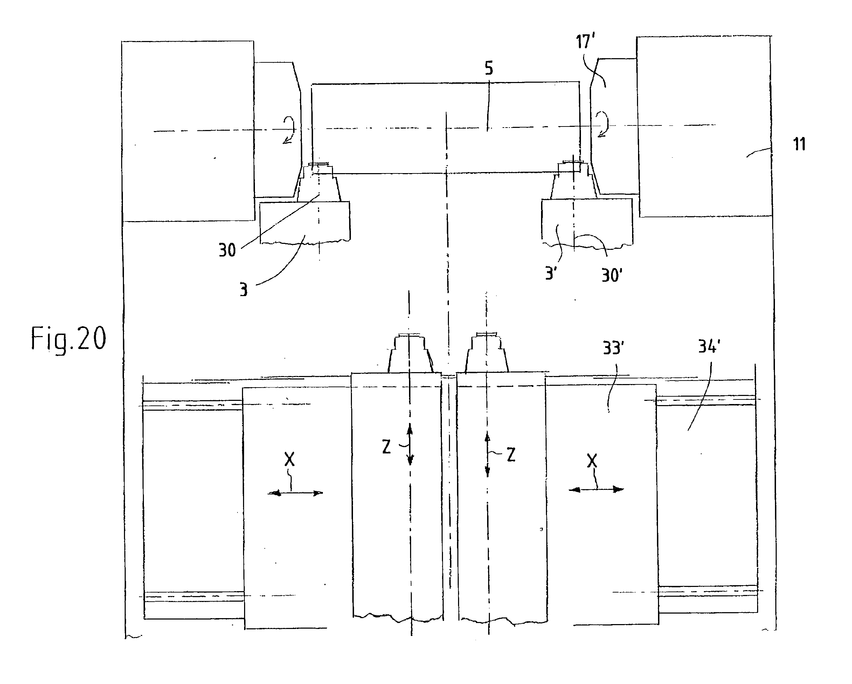

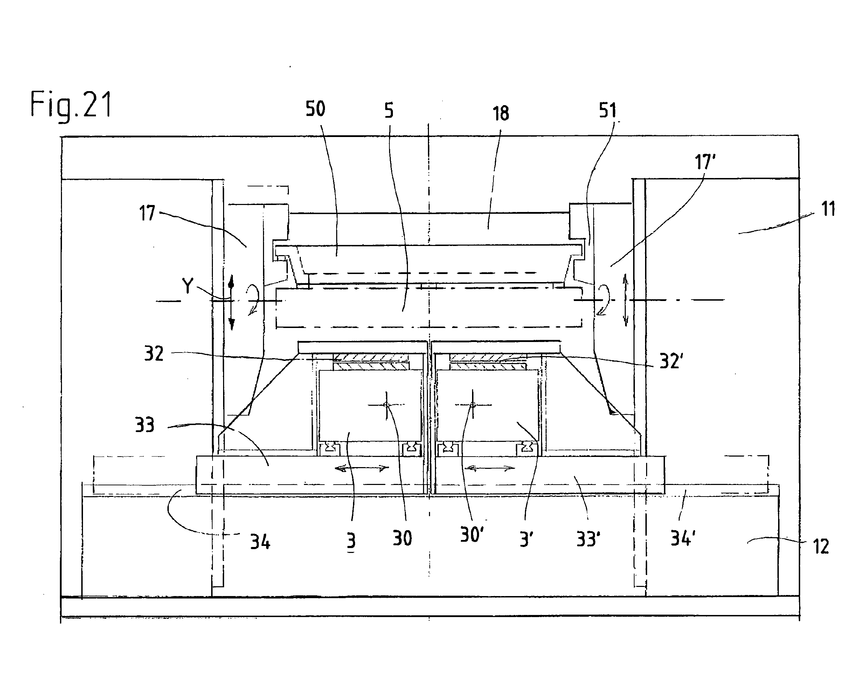

In einer weiteren Variante der Erfindung ist vorgesehen, daß die Werkzeugmaschine 1 einen Werkstückträger 50 zur Aufnahme der Werkstücke 5 aufweist, wobei der Werkstückträger 50 zwei oder mehrere, gegebenenfalls gleichartige oder unterschiedliche Werkstücke trägt. Eine solche Anordnung ist zum Beispiel in Fig. 21 gezeigt. Der Werkstückträger wird durch eine Spannvorrichtung 51, die an dem Werkstückschlitten 17 angeordnet ist, im Bearbeitungsraum 13 gespannt. Es ist nun möglich, daß auf dem Werkstückträger 50 ein oder mehrere Werkstücke 5 aufgespannt sind. Dies ist in Fig. 20 gezeigt.

Die hier gezeigte, erfindungsgemäße Werkzeugmaschine zeigt zwei Bearbeitungsspindeln 3, 3'. Der Abstand zwischen den beiden Bearbeitungsspindeln 3, 3' ist veränderbar. Hierzu ist die Bearbeitungsspindel 3 zunächst in einer Pinole in Z-Achse beweglich gelagert und die Pinole ihrerseits auf einem Schlitten 33, 33' angeordnet, wobei der Schlitten 33, 33' auf Führungen 34, 34' rechtwinklig zur Spindelachse 30 verfahrbar ist. Die Anordnung wird durch Antriebe 32, 32' angetrieben, hierzu dient zum Beispiel ein Linearmotor oder eine Kugelrollspindel. Dabei befindet sich die Bearbeitungsspindel 3 beziehungsweise die Spindelachse 30 zwischen dem Antrieb 32 einerseits und andererseits der Schlitten-Führungsanordnung 33, 34. Natürlich ist es möglich, eine andere Anordnung zu wählen, zum Beispiel derart, daß der Antrieb 32 in der Führung integriert ist.

Die Anordnung ist in der Werkzeugmaschine hierbei so gewählt, daß die beiden Bearbeitungsspindeln 3, 3' bezüglich einer Mittelebene symmetrisch angeordnet sind. Durch die symmetrische Anordnung wird der zur Verfügung stehende Platz beider Bearbeitungsspindeln gleichwertig und somit auch für unterschiedliche Einsatzbereiche optimal ausgenützt. Es ist in Fig. 20 gut zu erkennen, daß die assymetrische Anordnung der Bearbeitungsspindel in der Pinole dazu geeignet ist, auch den außersten Randbereich des Werkstückes 5 zu erreichen. Durch die symmetrische Anordnung werden beide Randbereiche erreicht.

Natürlich ist es möglich von dieser Symmetrie, zum Beispiel bei speziellen Bearbeitungen, abzuweichen.

Die Schlitten 33, 33' sind in X-Richtung beweglich. Gemäß einer weiteren Ausgestaltung der Erfindung ist vorgesehen, daß die Bearbeitungsspindel 3 je einen eigenen, jeweils voneinander unabhängigen Antrieb 32, 32' aufweisen, wodurch der Abstand zwischen den Bearbeitungsspindeln 3, 3' veränderbar ist. Auch wenn die Bearbeitungsspindeln symmetrisch angeordnet sind, wodurch sich zum Beispiel ein gemeinsamer Antrieb anbieten würde, erlaubt diese Variante der Erfindung einen hohen Grad an Flexibilität, da es auf eine entsprechende symmetrische Anordnung der Bearbeitungspunkte auf dem Werkstück oder den Werkstücken, die gemeinsam auf dem Werkstückträger 50 angeordnet sein mögen, nicht ankommt. Die Schlitten 33, 33' laufen gegebenenfalls auf einer gemeinsamen Führung, um insbesondere den mittleren Bereich so optimal abzudecken und keine toten Winkel, wo keine Bearbeitung möglich ist, zu bilden.

Zur Erhöhung der Stabilität ist vorgesehen, daß an dem Werkstückschlitten 17, 17' eine traversenartige Verbindung 18 vorgesehen ist.

Für eine möglichst hohe Flexibilität der Bearbeitung ist vorgesehen, daß die Werkstückschlitten 17 einen Rundtisch besitzen, durch welchen eine horizontal angeordnete Drehachse zur Verfügung steht.

Soweit in dieser Anmedlung die Ausgestaltung und Eigenschaften der Werkzeugzangen 46 nur in Bezug auf die Ausgestaltung an der Scheibe 47 beschrieben wurden, so gelten diese Ausgestaltungen und Eigenschaften in Bezug auf die Verwendung bei einem Kettenmagazin ebenfalls ausdrücklich zur Erfindung gehörig und offenbart.

In einer weiteren Variante der Erfindung wird auch vorgesehen, daß die Scheibe scheibenartig ausgebildet ist oder als Ringscheibe gestaltet ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die erfindungsgemäße Werkzeugmaschine kann sehr vielfältig eingesetzt werden. Es ist möglich, diese als Einzelmaschine zu betreiben, also keine Verkettung vorzusehen. Es ist aber auch möglich, die erfindungsgemäße Werkzeugmaschine als Teil einer Bearbeitungslinie einzusetzen. Hierbei sind die Werkzeugmaschinen untereinander verkettet, zum Beispiel in einer Transferstraße. Auch kann die Werkzeugmaschine als Bearbeitungszentrum ausgebildet sein.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in de Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Werkzeugmaschine, bei welcher für die insbesondere spanabhebende Bearbeitung von Werkstücken mehrere Bearbeitungsspindeln vorgesehen sind, wobei ein Werkzeugmagazin zum Vorhalten und Wechseln von Werkzeugen dient, wobei das eine Werkzeugmagazin zum Wechseln der Werkzeuge mindestens zweier Bearbeitungsspindeln dient, **dadurch gekennzeichnet, daß** zumindest ein Teil der vorgehaltenen Werkzeuge (31) und die zu wechselnden Werkzeuge (31) in einer Ebene (410) angeordnet sind.

2. Werkzeugmaschine nach dem vorhergehenden Anspruch 1, **dadurch gekennzeichnet, daß** eine Verbindungslinie zwischen den Bearbeitungsspindeln (3) Teil der Ebene (410) ist.

3. Werkzeugmaschine nach einem oder beiden der vorhergehenden Ansprüche, **dadurch gekennzeichnet, daß** die Ebene (410) für die Anordnung der Werkzeuge (31) im Werkzeugmagazin (4) im wesentlichen vertikal orientiert ist und/oder die Ebene (410) für die Anordnung der Werkzeuge (31) im Werkzeugmagazin (4) im wesentlichen horizontal orientiert ist.

4. Werkzeugmaschine nach einem oder mehreren der vorhergehenden Ansprüche, **dadurch gekennzeichnet, daß** das Werkzeugmagazin (4) als Kettenmagazin (45) ausgebildet ist und die Kette endlos umzulaufen vermag und die Kette Werkzeugzangen (46) zur Aufnahme der Werkzeuge (31) trägt und/oder das Werkzeugmagazin (4) eine insbesondere ringartige Scheibe (47) aufweist, die an ihrer Außenseite Werkzeugzangen (46) zur Aufnahme der Werkzeuge (31) trägt.

5. Werkzeugmaschine nach einem oder mehreren der vorhergehenden Ansprüche, **dadurch gekennzeichnet, daß** die Scheibe (47) an ihrer Außenseite rund oder mehreckig ausgebildet ist und/oder die ringartige Scheibe (47) auf ihrer Innenseite (400) einen Zahnkranz aufweist und der Zahnkranz mit einem Ritzel des Rotationsantriebes (49) zusammenwirkt.

6. Werkzeugmaschine nach einem oder mehreren der vorhergehenden Ansprüche, **dadurch gekennzeichnet, daß** die umlaufende Kette des Kettenmagazins (45) oder die Scheibe (47) die Ebene bestimmt und/oder die Spindelachse (30) parallel oder winkelig, insbesondere rechtwinkelig zur Ebene (410) orientiert ist und/oder die Werkzeugachse, insbesondere Symmetrie- oder Rotationsachse, des in dem Werkzeugmagazin (4) vorgehaltenen Werkzeuges (31) parallel oder winkelig, insbesondere rechtwinkelig zur Ebene (410) orientiert ist.

7. Werkzeugmaschine nach einem oder mehreren der vorhergehenden Ansprüche, **dadurch gekennzeichnet, daß** das Werkzeugmagazin (4) eine mit einem Tragbalken (10) verbindbare Aufnahme (48) besitzt, gegenüber der die Kette bzw. die Scheibe (47) beweglich ist.

8. Werkzeugmaschine nach einem oder mehreren der vorhergehenden Ansprüche, **dadurch gekennzeichnet, daß** an der Aufnahme (48) ein Antrieb (49) für das Werkzeugmagazin (4), insbesondere ein Kettenantrieb oder ein Rotationsantrieb für die Scheibe (47) vorgesehen ist.

9. Werkzeugmaschine nach einem oder mehreren der vorhergehenden Ansprüche, **dadurch gekennzeichnet, daß** der Abstand der Zangen (46) dem Abstand der Bearbeitungsspindeln, gegebenenfalls auch der Bearbeitungsspindeln unterschiedlicher Bearbeitungseinheiten entspricht und/oder der Abstand der Bearbeitungsspindeln (3) ein ganzzahliges Vielfaches des Zangenabstandes ist und/oder der Abstand der Bearbeitungsspindeln (3) variierbar ist und/oder der Abstand der Bearbeitungsspindeln (3) während der Bearbeitung und/oder während des Werkstückswechsels variiert wird.

10. Werkzeugmaschine nach einem oder mehreren der vorhergehenden Ansprüche, **dadurch gekennzeichnet, daß** der Abstand der Bearbeitungsspindeln (3) während der Bearbeitung variierbar ist und die Bearbeitungsspindeln für den Werkzeugwechsel in einen Werkzeugwechselabstand bringbar sind und/oder ein Verstellantrieb vorgesehen ist, durch den der Abstand der Bearbeitungsspindeln (3) einstellbar ist und/oder die Bearbeitungsspindeln (3) zumindest einer Bearbeitungseinheit auf einer oder mehreren Führung/en derart gelagert sind, daß der Abstand zwischen den Bearbeitungsspindeln (3) veränderbar ist und/oder der Abstand der Zangen (46) variierbar ist.

11. Werkzeugmaschine nach einem oder mehreren der vorhergehenden Ansprüche, **dadurch gekennzeichnet, daß** die Werkzeugmaschine einen Werkstückträger zur Aufnahme des oder der Werkstücke aufweist, wobei der Werkstückträger ein, zwei oder mehrere, gegebenenfalls gleichartige oder unterschiedliche Werkstücke trägt.

12. Werkzeugmaschine nach einem oder mehreren der vorhergehenden Ansprüche, **dadurch gekennzeichnet, daß** die Werkzeugmaschine zwei Bearbeitungsspindeln (3) aufweist, die bezüglich einer Mittelebene symmetrisch in der Werkzeugmaschine angeordnet sind.

13. Werkzeugmaschine nach einem oder mehreren der vorhergehenden Ansprüche, **dadurch gekennzeichnet, daß** die Bearbeitungsspindeln (3) je einen eigenen, jeweils voneinander unabhängige Antriebe (32) aufweisen, wodurch der Abstand zwischen den Bearbeitungsspindeln veränderbar ist.

14. Werkzeugmaschine nach einem oder mehreren der vorhergehenden Ansprüche, **dadurch gekennzeichnet, daß** die Zangen (46) in einer Linearführung (402) verschieblich gelagert sind und ein Zangenverstellantrieb (401) den Abstand der Zangen (46) voneinander ändert, insbesondere der Zangenverstellantrieb (401) durch einen auf alle Zangen (46) wirkenden Gewindetrieb gebildet ist.

15. Werkzeugmaschine nach einem oder mehreren der vorhergehenden Ansprüche, **dadurch gekennzeichnet, daß** die Gewindesteigung und/oder die Gewinderichtung auf den Gewindetrieb (401) für die Zangen (46) jeweils unterschiedlich ist.

16. Werkzeugmaschine nach einem oder mehreren der vorhergehenden Ansprüche, **dadurch gekennzeichnet, daß** am Umfang der Scheibe (47) jeweils abwechselnd mit mindestens zwei Zangensätzen mit jeweils k Zangen vorgesehen sind und die Zangen eines Zangensatzes (6, 60) je auf einer Zangenlinie (61, 62) liegen.

17. Werkzeugmaschine nach einem oder mehreren der vorhergehenden Ansprüche, **dadurch gekennzeichnet, daß** sich die Zangenlinien (61, 62) unterschiedlicher Zangensätze (6, 60) unter einem Verstellwinkel α schneiden.

18. Werkzeugmaschine nach einem oder mehreren der vorhergehenden Ansprüche, **dadurch gekennzeichnet, daß** das Werkzeugmagazin (4) durch Verdrehen der Scheibe (47) um den Verstellwinkel α der Bearbeitungseinheit (3) einen neuen Zangensatz zum Aus- oder Einwechseln von Werkzeugen anzubieten vermag.

19. Werkzeugmaschine nach einem oder mehreren der vorhergehenden Ansprüche, **dadurch gekennzeichnet, daß** die Zangen (46) in Langlöchern (403) geführt und gehalten sind und so eine Einstellbarkeit möglich ist und/oder Zangenplatten (404) vorgesehen sind, die eine oder mehrere Zangen (46) bzw. Zangensätze tragen, wobei die Zangenplatte (404) als Ganzes mit der Scheibe (47) verbindbar ist.

20. Werkzeugmaschine nach einem oder mehreren der vorhergehenden Ansprüche, **dadurch gekennzeichnet, daß** das Werkzeugmagazin (4) eine Magazintür (44) aufweist, die im Falle des Werkzeugwechsels geöffnet ist wobei insbesondere die Öffnungsbewegung der Magazintür (44) von der Bewegung des Werkzeugmagazins (4) auf dem Tragbalken (10) abgeleitet ist.

21. Werkzeugmaschine, insbesondere nach einem oder mehreren der vorhergehenden Ansprüche, für die insbesondere spanabhebende Bearbeitung von Werkstücken durch eine mindestens eine Bearbeitungsspindel aufweisende Bearbeitungseinheit, wobei ein Werkzeugmagazin vorgesehen ist, welches zum Vorhalten und Wechseln der Werkzeuge auf der Bearbeitungsspindel dient, **dadurch gekennzeichnet, daß** das Werkzeugmagazin (4) von einem Tragbalken (10) gehalten ist, welcher das Werkzeugmagazin (4) durchdringt.

22. Werkzeugmaschine nach einem oder mehreren der vorhergehenden Ansprüche, **dadurch gekennzeichnet, daß** das Werkzeugmagazin (4) gegenüber den Bearbeitungsspindeln (3) bewegbar ausgebildet ist und/oder das Werkzeugmagazin der Werkzeugmaschine von einem Tragbalken (10) gehalten ist, welcher sich im wesentlichen rechtwinklig zur Bearbeitungsspindel erstreckt und/oder der Tragbalken (10) eine Traverse zwischen den Ständern bildet und die Ständer ihrerseits Mittel zur Aufnahme des Werkstückes aufweisen und/oder das Werkzeugmagazin (4) einen in dem Tragbalken (10) einsetzbaren Tragbalkenteil (40) aufweist und/oder das Werkzeugmagazin (4) eine Aussparung (41) im Bereich der Durchdringung des Tragbalkens (10) aufweist und/oder Werkzeugmagazin (4) gleichzeitig an mehreren, mindestens zwei Bearbeitungsspindeln das Werkzeug wechselt.

23. Werkzeugmaschine nach einem oder mehreren der vorhergehenden Ansprüche, **dadurch gekennzeichnet, daß** das Werkzeugmagazin (4) einen Bewegungsantrieb (42), zum Beispiel einen Arbeitszylinder aufweist, der eine Bewegung des Werkzeugmagazins (4) im wesentlichen rechtwinklig zur Tragbalkenerstreckung unter Ausnutzung der Aussparung (41) erlaubt und/oder das Werkzeugmagazin (4) im Bereich der Aussparung (41) eine Führung (43) aufweist und der Tragbalkenteil (40) schlittenartig auf der Führung (43) bewegbar ist und/oder der Tragbalken (10) zur Aussteifung des Werkzeugmagazines (4) dient.

24. Werkzeugmaschine nach einem oder mehrerren der vorhergehenden Ansprüche, **dadurch gekennzeichnet, daß** sich der Tragbalken (10) oberhalb der Bearbeitungseinheit (2) erstreckt und/oder der Trag balken (10) im wesentlichen parallel zur Spindelachse (30) der Bearbeitungsspindel ist und/oder der Tragbalken (10) den Bearbeitungsraum (13) überspannt und/oder mit dem Werkzeugmaschinenbett (12) verbundene Ständer (11) vorgesehen sind, die den Tragbalken (10) halten.

25. Werkzeugmaschine nach einem oder mehreren der vorhergehenden Ansprüche, **dadurch gekennzeichnet, daß** das Werkzeugmagazin (4) vertikal absenkbar ist und/oder die Werkzeugmaschine mindestens zwei Bearbeitungseinheiten mit je mindestens einer Bearbeitungsspindel besitzt.

26. Werkzeugmaschine nach einem oder mehreren der vorhergehenden Ansprüche, **dadurch gekennzeichnet, daß** die Bearbeitungseinheiten beziehungsweise die verschiedenen Bearbeitungsspindeln von unterschiedlichen Seiten das Werkstück bearbeiten und/oder das Werkzeugmagazin (4) auf dem Tragbalken (10) verfahrbar ist und/oder das Werkzeugmagazin (4) zum Wechseln der Werkzeuge (31) der Bearbeitungsspindel mehreren Bearbeitungseinheiten (3), dient und/oder die Werkzeuge (31) im Werkzeugmagazin (3) mehrreihig angeordnet sind.
